# EUROPEAN PATENT APPLICATION

(11) **EP 4 287 688 A1**
(43) Date of publication of application: **06.12.2023**
(21) Application number: 22752083.0
(22) Date of filing: 17.01.2022
(51) Int. Cl.: H04W 24/00

(54) **NETWORK ISSUE INFORMATION ACQUISITION METHOD, APPARATUS AND SYSTEM**

(30) Priority: 09.02.2021 CN 202110179319
(71) Applicant: Huawei Technologies Co., Ltd., Shenzhen, Guangdong 518129 (CN)
(72) Inventor: XU, Ruiyue, Shenzhen, Guangdong 518129 (CN); ZOU, Lan, Shenzhen, Guangdong 518129 (CN); ZHANG, Kai, Shenzhen, Guangdong 518129 (CN)
(74) Representative: Huawei European IPR
(86) International application number: PCT/CN2022/072374
(87) International publication number: WO 2022/170921

(57) **Abstract**

This application provides a network issue information obtaining method and apparatus, and a system, applied to a 4G system, a 5G system, and a future communication system such as a 6G system, to improve network operation&maintenance efficiency of an operator network device. The method includes: determining first information about a network issue (S301); and sending the first information to a second apparatus (S302). The first information includes one or more of the following: identification information of the network issue, diagnosis information of the network issue, or recovery information of the network issue, the diagnosis information describes an analysis result of the network issue, and the recovery information describes a recovery status of the network issue. Because a first apparatus may be a vendor network device, and the second apparatus may be the operator network device, the vendor network device can send the first information about the network issue to the operator network device in real time, and the operator network device can manage, control and resolve the network issue in a network in real time based on the first information. This can improve network operation&maintenance efficiency.

## Description

This application claims priority to Chinese Patent Application No. 202110179319.5, filed with the China National Intellectual Property Administration on February 9, 2021 and entitled "NETWORK ISSUE INFORMATION OBTAINING METHOD AND APPARATUS, AND SYSTEM", which is incorporated herein by reference in its entirety.

### TECHNICAL FIELD

This application relates to the communication field, and in particular, to a network issue information obtaining method and apparatus, and a system.

### BACKGROUND

With introduction of the vertical industry (for example, the public transport industry, the industrial manufacturing industry, or the automobile industry), increase of terminal devices, and diversification of services, operator networks become more and more complex, which results in larger difficulty in network operation&maintenance and lower network operation&maintenance efficiency.

Currently, an operator network device, such as a cross domain management function (cross domain management function) unit, and a vendor network device, such as a domain management function (domain management function) unit, jointly complete a network operation&maintenance operation. Specifically, the vendor network device completes a network operation&maintenance task, for example, adjusts a data transmission rate or increases transmit power of a base station, based on an indication of the operator network device. However, the operator network device cannot obtain information about a network issue, for example, a cause, time, and a location of the network issue. Therefore, the sent indication is neither accurate nor timely. Consequently, the network issue cannot be resolved in time, resulting in low network operation& maintenance efficiency.

### SUMMARY

Embodiments of this application provide a network issue information obtaining method and apparatus, and a system, to improve network operation&maintenance efficiency of an operator network device.

To achieve the foregoing objective, this application uses the following technical solutions.

According to a first aspect, a network issue information obtaining method is provided. The method is applied to a first apparatus. The method includes: determining first information about a network issue; and sending the first information to a second apparatus. The first information includes one or more of the following: identification information of the network issue (issue recognition info, or issue identification info), and diagnosis information of the network issue (issue diagnosis info or issue analysis info), or recovery information of the network issue (issue recovery info, or issue healing info), the diagnosis information describes an analysis result of the network issue, and the recovery information describes a recovery status of the network issue.

Based on the network issue information obtaining method according to the first aspect and a network issue information obtaining method according to the second aspect, the first apparatus may be a vendor network device, and the second apparatus may be an operator network device. The vendor network device can send the first information about the network issue to the operator network device in real time, and the operator network device can determine, in real time based on the first information, an operation for processing the network issue. In other words, the operator network device can manage, control, and resolve the network issue in a network in real time. This can improve network operation&maintenance efficiency.

In addition, if the vendor network device detects that a weak-coverage network issue in an area 1, but actually because the area 1 has a few users, the weak-coverage network issue in the area 1 does not need to be resolved. After receiving the network issue, the operator network device may indicate the vendor network device to ignore the network issue. In other words, the operator network device may further indicate the vendor network device to resolve a network issue that the operator network device expects to resolve, so as to prevent the vendor network device from resolving a network issue that the operator network device does not expect to resolve. This further improves network operation&maintenance efficiency.

It should be noted that the first information may also be referred to as information about the network issue (issue info), and the identification information of the network issue may also be referred to as discovery information of the network issue.

In a possible design solution, the network issue may include one or more of the following: a network fault, a network exception, or a network performance indicator exception. In this way, the operator network device can manage, control, and resolve the network issue, such as the network fault, the network exception, or the network performance indicator exception, in a network in real time. This can improve network operation&maintenance efficiency. In addition, information such as the network fault, the network exception, or the network performance indicator exception may be integrated into one piece of information (namely, the network issue), so that a plurality of interfaces between the first apparatus and the second apparatus can be integrated into one interface. This reduces interface interaction complexity, improves information integration efficiency, and further improves network operation&maintenance efficiency.

It should be noted that the network performance indicator exception may also be referred to as that a network performance indicator does not meet a requirement.

In a possible design solution, the identification information of the network issue may include one or more of the following: a type of the network issue (issue type), or an object of the network issue (issue object). The type of the network issue may include one or more of the following: coverage, a rate, a capacity, a device fault, service experience (service experience), mobility, or energy consumption. The coverage describes an issue in network coverage, the rate describes an issue in a network rate, the capacity describes an issue in a network capacity, the service experience describes an issue in network service experience, the mobility describes an issue in network mobility, energy consumption describes an issue in network energy consumption, and the device fault describes a fault in a network device. The object of the network issue may include one or more of the following: location information (for example, a geographic grid, a geographic area, or longitude and latitude of a geographic grid), a network element, a cell, or a terminal user.

Optionally, the coverage may correspond to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in a network, a mismatch between uplink and downlink coverage of a network, or pilot contamination in a network. The rate may correspond to one or more of the following network issues: the rate is less than a first rate threshold (for example, an average rate is less than an average rate threshold, or a peak rate is less than a peak rate threshold), a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. The capacity may correspond to one or more of the following network issues: network load is greater than a load threshold, network load is unbalanced, or a network is congested. The device fault may correspond to one or more of the following network issues: a base station fault, a fronthaul fault, an optical interface fault, a clock fault, a cell fault, or a standing wave fault. The service experience may correspond to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score (mean opinion score, MOS) is less than a mean opinion score threshold. The mean opinion score describes voice or video quality. The mobility may correspond to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. The energy consumption may correspond to one or more of the following network issues: the energy consumption is greater than an energy consumption threshold, or a traffic volume is low but the energy consumption is high (may be referred to as that a traffic volume is lower than a traffic volume threshold but energy consumption is greater than an energy consumption threshold).

In the network issue corresponding to the coverage, that the coverage rate is less than the first coverage rate threshold may also be referred to as weak coverage, that the coverage rate is greater than the second coverage rate threshold may also be referred to as over-coverage, that the reference signal received power is less than the reference signal received power threshold may also be referred to as low reference signal received power, and that the signal to interference plus noise ratio is less than the signal to interference plus noise ratio threshold may also be referred to as a small signal to interference plus noise ratio. In the network issue corresponding to the rate, that the rate is less than the first rate threshold may also be referred to as a low rate, that the quantity of low-rate users is greater than the first quantity threshold may also be referred to as a large quantity of low-rate users, and that the quantity of high-rate users is less than the second quantity threshold may also be referred to as a small quantity of high-rate users. In the network issue corresponding to the capacity, that the network load is greater than the load threshold may also be referred to as high load. In the network issue corresponding to the service experience, that the delay is greater than the delay threshold may also be referred to as a large delay, that the delay jitter is greater than the delay jitter threshold may also be referred to as a large delay jitter, that the access success rate is less than the access success rate threshold may also be referred to as a low access success rate, that the call drop rate is greater than the call drop rate threshold, and that the packet loss rate is greater than the packet loss rate threshold each may also be referred to as a high packet loss rate. In the network issue corresponding to the mobility, that the handover success rate is less than the handover success rate threshold may also be referred to as a low handover success rate, that the premature handover rate is greater than the premature handover rate threshold may also be referred to as a high premature handover rate, that the delayed handover rate is greater than the delayed handover rate threshold may also be referred to as a high delayed handover rate, and that the ping-pong handover (ping-pong handover) rate is greater than the ping-pong handover rate threshold may also be referred to as a frequent ping-pong handover or a large ping-pong handover rate. In the network issue corresponding to the energy consumption, that the energy consumption is greater than the energy consumption threshold may also be referred to as high energy consumption.

For example, in the identification information of the network issue, if a type of the network issue is the service experience, the network issue corresponding to the service experience is that the delay is greater than the delay threshold, and the object of the network issue is a network element 1, the operator network device may determine, based on the identification information of the network issue, an operation for processing the network issue in the network element 1, so as to resolve the network issue targetedly. In other words, the identification information of the network issue is classified in detail, so that the identification information of the network issue is more accurate and detailed. The operator network device can obtain the detailed identification information of the network issue in real time, and accurately locate the network issue, thereby improving precision of identifying the network issue by the operator network device. In addition, the operation for processing the network issue can be targetedly determined, so that the network issue in the network can be accurately and effectively resolved, and network operation&maintenance efficiency can be improved.

It should be noted that the identification information of the network issue may further include a name of the network issue (issue name), and the name of the network issue may include the network issue corresponding to the coverage, the network issue corresponding to the rate, the network issue corresponding to the capacity, the network issue corresponding to the device fault, the network issue corresponding to the service experience, the network issue corresponding to the mobility, or the network issue corresponding to the energy consumption.

In a possible design solution, the diagnosis information of the network issue may include one or more of the following: a cause of the network issue (issue root cause), a recovery capability corresponding to the network issue (issue recovery capability), a recovery suggestion for the network issue (issue recovery recommendation), or a predicted recovery result (predicted recovery result) of the network issue. The recovery capability corresponding to the network issue may include: the first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

The network issue that the first apparatus can recover may be referred to as recoverable, and the network issue that the first apparatus cannot recover may be referred to as unrecoverable.

For example, in the diagnosis information of the network issue, if the cause of the network issue is that a parameter of a cell is configured inappropriately, the recovery capability corresponding to the network issue is that the first apparatus can recover the network issue, the recovery suggestion for the network issue is a configuration parameter of the cell, and the predicted recovery result of the network issue is a predicted rate that can be achieved by a network after the recovery, the operator network device may determine, based on the diagnosis information of the network issue, an operation for processing the network issue (for example, configure the cell based on the configuration parameter of the cell in the recovery suggestion for the network issue), so as to targetedly resolve the network issue. In other words, the diagnosis information of the network issue is classified in detail, so that the diagnosis information of the network issue is more accurate and detailed. The operator network device can obtain the detailed diagnosis information of the network issue in real time, and accurately locate the network issue, thereby improving precision of identifying the network issue by the operator network device. In addition, the operation for processing the network issue can be targetedly determined, so that the network issue in the network can be accurately and effectively resolved, and network operation&maintenance efficiency can be improved.

In a possible design solution, the recovery information of the network issue may include one or more of the following: a recovery status of the network issue (issue recovery status), or a recovery result of the network issue (issue recovery result). The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

For example, if the recovery information of the network issue includes being recovered, the operator network device may determine, based on the recovery information of the network issue, an operation for processing the network issue (for example, periodically query a recovery progress of the network issue), so as to targetedly resolve the network issue. In other words, the recovery information of the network issue is classified in detail, so that the recovery information of the network issue is more accurate and detailed. The operator network device can obtain the detailed recovery information of the network issue in real time, and accurately locate the network issue, thereby improving precision of identifying the network issue by the operator network device. In addition, the operation for processing the network issue can be targetedly determined, so that the network issue in the network can be accurately and effectively resolved, and network operation&maintenance efficiency can be improved.

In a possible design solution, before the determining first information, the network issue information obtaining method according to the first aspect may further include: receiving a first request from the second apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue. In this way, the operator network device can obtain the specified network issue in time by sending the first request to the vendor network device. This can manage, control, and resolve the specified network issue and improve network operation&maintenance efficiency.

It should be noted that the first request may also be referred to as a query request (query request).

In a possible design solution, before the determining first information, the network issue information obtaining method according to the first aspect may further include: receiving a second request from the second apparatus. The second request carries a network issue subscription requirement condition, and the network issue subscription requirement condition is used to indicate that the first apparatus feeds back the first information if the first information that meets the network issue subscription requirement condition is generated or updated. In other words, the operator network device can continuously obtain a specified and latest network issue by sending the second request to the vendor network device. This can manage, control, and resolve the specified network issue in time, and improve network operation&maintenance efficiency.

It should be noted that the second request may also be referred to as a subscription request (subscription request).

According to a second aspect, a network issue information obtaining method is provided. The method is applied to a second apparatus. The method includes: receiving first information about a network issue from a first apparatus, and determining, based on the first information, an operation for processing the network issue. The first information includes one or more of the following: identification information of the network issue, diagnosis information of the network issue, or recovery information of the network issue, the diagnosis information describes an analysis result of the network issue, and the recovery information describes a recovery status of the network issue.

In a possible design solution, the network issue may include one or more of the following: a network fault, a network exception, or a network performance indicator exception.

In a possible design solution, the identification information of the network issue may include one or more of the following: a type of the network issue (issue type), or an object of the network issue (issue object). The type of the network issue may include one or more of the following: coverage, a rate, a capacity, a device fault, service experience (service experience), mobility, or energy consumption. The coverage describes a coverage issue of a network, the capacity describes a capacity issue of the network, and the mobility describes a mobility issue of the network. The object of the network issue may include one or more of the following: location information (for example, a geographic grid, a geographic area, or longitude and latitude of a geographic grid), a network element, a cell, or a terminal user.

Optionally, the coverage may correspond to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in a network, a mismatch between uplink and downlink coverage of a network, or pilot contamination in a network. The rate may correspond to one or more of the following network issues: the rate is less than a first rate threshold (for example, an average rate is less than an average rate threshold, or a peak rate is less than a peak rate threshold), a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. The capacity may correspond to one or more of the following network issues: network load is greater than a load threshold, network load is unbalanced, or a network is congested. The device fault may correspond to one or more of the following network issues: a base station fault, a fronthaul fault, an optical interface fault, a clock fault, a cell fault, or a standing wave fault. The service experience may correspond to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold. The mean opinion score describes voice or video quality. The mobility may correspond to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. The energy consumption may correspond to one or more of the following network issues: the energy consumption is greater than an energy consumption threshold, or a traffic volume is low but the energy consumption is high (for example, a traffic volume is lower than a traffic volume threshold but the energy consumption is greater than an energy consumption threshold).

In a possible design solution, the diagnosis information of the network issue may include one or more of the following: a cause of the network issue, a recovery capability corresponding to the network issue, a recovery suggestion for the network issue, or a predicted recovery result of the network issue. The recovery capability corresponding to the network issue may include: the first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

In a possible design solution, the recovery information of the network issue may include one or more of the following: a recovery status of the network issue, or a recovery result of the network issue. The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

In a possible design solution, before the receiving first information about a network issue from a first apparatus, the network issue information obtaining method according to the second aspect may further include: sending a first request to the first apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue.

In a possible design solution, before the receiving first information about a network issue from a first apparatus, the network issue information obtaining method according to the second aspect may further include: sending a second request to the first apparatus. The second request carries a network issue subscription requirement condition, and the network issue subscription requirement condition is used to indicate that the first apparatus feeds back the first information if the first information that meets the network issue subscription requirement condition is generated or updated.

In addition, for technical effect of the network issue information obtaining method according to the second aspect, refer to the technical effect of the network issue information obtaining method according to the first aspect. Details are not described herein again.

According to a third aspect, a network issue information obtaining apparatus is provided. The network issue information obtaining apparatus includes a processing module and a transceiver module. The processing module is configured to determine first information about a network issue. The first information includes one or more of the following: identification information of the network issue, diagnosis information of the network issue, or recovery information of the network issue, the diagnosis information describes an analysis result of the network issue, and the recovery information describes a recovery status of the network issue. The transceiver module is configured to send the first information to a second apparatus.

In a possible design solution, the network issue may include one or more of the following: a network fault, a network exception, or a network performance indicator exception.

In a possible design solution, the identification information of the network issue may include one or more of the following: a type of the network issue, or an object of the network issue (issue object). The type of the network issue may include one or more of the following: coverage, a rate, a capacity, a device fault, service experience, mobility, or energy consumption. The coverage describes a coverage issue of a network, the capacity describes a capacity issue of the network, and the mobility describes a mobility issue of the network. The object of the network issue may include one or more of the following: location information (for example, a geographic grid, a geographic area, or longitude and latitude of a geographic grid), a network element, a cell, or a terminal user.

Optionally, the coverage may correspond to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in a network, a mismatch between uplink and downlink coverage of a network, or pilot contamination in a network. The rate may correspond to one or more of the following network issues: the rate is less than a first rate threshold (for example, an average rate is less than an average rate threshold, or a peak rate is less than a peak rate threshold), a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. The capacity may correspond to one or more of the following network issues: network load is greater than a load threshold, network load is unbalanced, or a network is congested. The device fault may correspond to one or more of the following network issues: a base station fault, a fronthaul fault, an optical interface fault, a clock fault, a cell fault, or a standing wave fault. The service experience may correspond to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold. The mean opinion score describes voice or video quality. The mobility may correspond to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. The energy consumption may correspond to one or more of the following network issues: the energy consumption is greater than an energy consumption threshold, or a traffic volume is low but the energy consumption is high (for example, a traffic volume is lower than a traffic volume threshold but energy consumption is greater than an energy consumption threshold).

In a possible design solution, the diagnosis information of the network issue may include one or more of the following: a cause of the network issue, a recovery capability corresponding to the network issue, a recovery suggestion for the network issue, or a predicted recovery result of the network issue. The recovery capability corresponding to the network issue may include: the first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

In a possible design solution, the recovery information of the network issue may include one or more of the following: a recovery status of the network issue, or a recovery result of the network issue. The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

In a possible design solution, the transceiver module is further configured to receive a first request from the second apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue.

In a possible design solution, the transceiver module is further configured to receive a second request from the second apparatus. The second request carries a network issue subscription requirement condition, and the network issue subscription requirement condition is used to indicate that the first apparatus feeds back the first information if the first information that meets the network issue subscription requirement condition is generated or updated.

Optionally, the transceiver module may include a receiving module and a sending module. The receiving module is configured to implement a receiving function of the network issue information obtaining apparatus according to the third aspect, and the sending module is configured to implement a sending function of the network issue information obtaining apparatus according to the third aspect.

Optionally, the network issue information obtaining apparatus according to the third aspect may further include a storage module, and the storage module stores a program or instructions. When the processing module executes the program or the instructions, the network issue information obtaining apparatus can perform the network issue information obtaining method according to the first aspect.

It should be noted that the network issue information obtaining apparatus according to the third aspect may be a vendor network device (for example, a domain management function unit), or may be a chip (system) or another component or part that may be disposed in the vendor network device, or may be an apparatus including the vendor network device. This is not limited in this application.

In addition, for technical effect of the network issue information obtaining apparatus according to the third aspect, refer to the technical effect of the network issue information obtaining method according to the first aspect. Details are not described herein again.

According to a fourth aspect, a network issue information obtaining apparatus is provided. The network issue information obtaining apparatus includes a processing module and a transceiver module. The transceiver module is configured to receive first information about a network issue from a first apparatus. The first information includes one or more of the following: identification information of the network issue, diagnosis information of the network issue, or recovery information of the network issue, the diagnosis information describes an analysis result of the network issue, and the recovery information describes a recovery status of the network issue. The processing module is configured to determine, based on the first information, an operation for processing the network issue.

In a possible design solution, the network issue may include one or more of the following: a network fault, a network exception, or a network performance indicator exception.

In a possible design solution, the identification information of the network issue may include one or more of the following: a type of the network issue (issue type), or an object of the network issue (issue object). The type of the network issue may include one or more of the following: coverage, a rate, a capacity, a device fault, service experience, mobility, or energy consumption. The coverage describes a coverage issue of a network, the capacity describes a capacity issue of the network, and the mobility describes a mobility issue of the network. The object of the network issue may include one or more of the following: location information (for example, a geographic grid, a geographic area, or longitude and latitude of a geographic grid), a network element, a cell, or a terminal user.

Optionally, the coverage may correspond to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in a network, a mismatch between uplink and downlink coverage of a network, or pilot contamination in a network. The rate may correspond to one or more of the following network issues: the rate is less than a first rate threshold (for example, an average rate is less than an average rate threshold, or a peak rate is less than a peak rate threshold), a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. The capacity may correspond to one or more of the following network issues: network load is greater than a load threshold, network load is unbalanced, or a network is congested. The device fault may correspond to one or more of the following network issues: a base station fault, a fronthaul fault, an optical interface fault, a clock fault, a cell fault, or a standing wave fault. The service experience may correspond to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold. The mean opinion score describes voice or video quality. The mobility may correspond to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. The energy consumption may correspond to one or more of the following network issues: the energy consumption is greater than an energy consumption threshold, or a traffic volume is low but the energy consumption is high (for example, a traffic volume is lower than a traffic volume threshold but energy consumption is greater than an energy consumption threshold).

In a possible design solution, the diagnosis information of the network issue may include one or more of the following: a cause of the network issue, a recovery capability corresponding to the network issue, a recovery suggestion for the network issue, or a predicted recovery result of the network issue. The recovery capability corresponding to the network issue may include: the first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

In a possible design solution, the recovery information of the network issue may include one or more of the following: a recovery status of the network issue, or a recovery result of the network issue. The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

In a possible design solution, the transceiver module is further configured to send a first request to the first apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue.

In a possible design solution, the transceiver module is further configured to send a second request to the first apparatus. The second request carries a network issue subscription requirement condition, and the network issue subscription requirement condition is used to indicate that the first apparatus feeds back the first information if the first information that meets the network issue subscription requirement condition is generated or updated.

Optionally, a sending module and a receiving module may be integrated into one module, for example, a transceiver module. The receiving module is configured to implement a receiving function of the network issue information obtaining apparatus according to the fourth aspect, and the sending module is configured to implement a sending function of the network issue information obtaining apparatus according to the fourth aspect.

Optionally, the network issue information obtaining apparatus according to the fourth aspect may further include a storage module, and the storage module stores a program or instructions. When the processing module executes the program or the instructions, the network issue information obtaining apparatus can perform the network issue information obtaining method according to the second aspect.

It should be noted that the network issue information obtaining apparatus according to the fourth aspect may be an operator network device (for example, a cross domain management function unit), or may be a chip (system) or another component or part that may be disposed in the operator network device, or may be an apparatus including the operator network device. This is not limited in this application.

In addition, for technical effect of the network issue information obtaining apparatus according to the fourth aspect, refer to the technical effect of the network issue information obtaining method according to the second aspect. Details are not described herein again.

According to a fifth aspect, a network issue information obtaining apparatus is provided. The network issue information obtaining apparatus is configured to perform the network issue information obtaining method according to any one of the implementations of the first aspect or the second aspect.

In this application, the network issue information obtaining apparatus according to the fifth aspect may be the vendor network device according to the first aspect or the operator network device according to the second aspect, or a chip (system) or another component or part that may be disposed in the vendor network device or the operator network device, or an apparatus including the vendor network device or the operator network device.

It should be understood that the network issue information obtaining apparatus according to the fifth aspect includes a corresponding module, a unit, or a means (means) for implementing the network issue information obtaining method according to the first aspect or the second aspect. The module, the unit, or the means may be implemented by hardware, or implemented by software, or implemented by hardware executing corresponding software. The hardware or software includes one or more modules or units configured to perform functions related to the network issue information obtaining method.

In addition, for technical effect of the network issue information obtaining apparatus according to the fifth aspect, refer to the technical effect of the network issue information obtaining method according to the first aspect or the second aspect. Details are not described herein again.

According to a sixth aspect, a network issue information obtaining apparatus is provided. The network issue information obtaining apparatus includes a processor, where the processor is configured to perform the network issue information obtaining method according to any one of the implementations of the first aspect or the second aspect.

In a possible design solution, the network issue information obtaining apparatus according to the sixth aspect may further include a transceiver. The transceiver may be a transceiver circuit or an interface circuit. The transceiver may be used in communication between the network issue information obtaining apparatus according to the sixth aspect and another network issue information obtaining apparatus.

In a possible design solution, the network issue information obtaining apparatus according to the sixth aspect may further include a memory. The memory and the processor may be integrated together, or may be disposed separately. The memory may be configured to store a computer program and/or data related to the network issue information obtaining method according to any one of the first aspect or the second aspect.

In this application, the network issue information obtaining apparatus according to the sixth aspect may be the vendor network device according to the first aspect or the operator network device according to the second aspect, or a chip (system) or another component or part that may be disposed in the vendor network device or the operator network device, or an apparatus including the vendor network device or the operator network device.

In addition, for technical effect of the network issue information obtaining apparatus according to the sixth aspect, refer to the technical effect of the network issue information obtaining method according to any one of the implementations of the first aspect or the second aspect. Details are not described herein again.

According to a seventh aspect, a network issue information obtaining apparatus is provided. The network issue information obtaining apparatus includes a processor. The processor is coupled to a memory, and the processor is configured to execute a computer program stored in the memory, so that the network issue information obtaining apparatus performs the network issue information obtaining method according to any one of the possible implementations of the first aspect or the second aspect.

In a possible design solution, the network issue information obtaining apparatus according to the eighth aspect may further include a transceiver. The transceiver may be a transceiver circuit or an interface circuit. The transceiver may be used in communication between the network issue information obtaining apparatus according to the eighth aspect and another network issue information obtaining apparatus.

In this application, the network issue information obtaining apparatus according to the eighth aspect may be the vendor network device according to the first aspect or the operator network device according to the second aspect, or a chip (system) or another component or part that may be disposed in the vendor network device or the operator network device, or an apparatus including the vendor network device or the operator network device.

In addition, for technical effect of the network issue information obtaining apparatus according to the eighth aspect, refer to the technical effect of the network issue information obtaining method according to any one of the implementations of the first aspect or the second aspect. Details are not described herein again.

According to an eighth aspect, a network issue information obtaining apparatus is provided, including a processor and a memory. The memory is configured to store a computer program. When the processor executes the computer program, the network issue information obtaining apparatus performs the network issue information obtaining method according to any one of the implementations of the first aspect or the second aspect.

In a possible design solution, the network issue information obtaining apparatus according to the eighth aspect may further include a transceiver. The transceiver may be a transceiver circuit or an interface circuit. The transceiver may be used in communication between the network issue information obtaining apparatus according to the eighth aspect and another network issue information obtaining apparatus.

In this application, the network issue information obtaining apparatus according to the eighth aspect may be the vendor network device according to the first aspect or the operator network device according to the second aspect, or a chip (system) or another component or part that may be disposed in the vendor network device or the operator network device, or an apparatus including the vendor network device or the operator network device.

In addition, for technical effect of the network issue information obtaining apparatus according to the eighth aspect, refer to the technical effect of the network issue information obtaining method according to any one of the implementations of the first aspect or the second aspect. Details are not described herein again.

According to a ninth aspect, a network issue information obtaining apparatus is provided, including a processor. The processor is configured to: after being coupled to a memory and reading a computer program in the memory, perform, based on the computer program, the network issue information obtaining method according to any one of the implementations of the first aspect or the second aspect.

In a possible design solution, the network issue information obtaining apparatus according to the ninth aspect may further include a transceiver. The transceiver may be a transceiver circuit or an interface circuit. The transceiver may be used in communication between the network issue information obtaining apparatus according to the ninth aspect and another network issue information obtaining apparatus.

In this application, the network issue information obtaining apparatus according to the ninth aspect may be the vendor network device according to the first aspect or the operator network device according to the second aspect, or a chip (system) or another component or part that may be disposed in the vendor network device or the operator network device, or an apparatus including the vendor network device or the operator network device.

In addition, for technical effect of the network issue information obtaining apparatus according to the ninth aspect, refer to the technical effect of the network issue information obtaining method according to any one of the implementations of the first aspect or the second aspect. Details are not described herein again.

According to a tenth aspect, a processor is provided. The processor is configured to perform the network issue information obtaining method according to any one of the possible implementations of the first aspect or the second aspect.

According to an eleventh aspect, a communication system is provided. The communication system includes a first apparatus and a second apparatus, and the first apparatus is connected to the second apparatus. The first apparatus is configured to perform the network issue information obtaining method according to the first aspect. The second apparatus is configured to perform the network issue information obtaining method according to the second aspect.

In addition, for technical effect of the communication system according to the eleventh aspect, refer to the technical effect of the network issue information obtaining methods according to the first aspect and the second aspect. Details are not described herein again.

According to a twelfth aspect, a communication method is provided. The communication method is applied to a communication system, the communication system includes a first apparatus and a second apparatus, and the first apparatus is connected to the second apparatus. The communication method includes: The first apparatus determines first information about a network issue, and sends the first information to the second apparatus. The first information includes one or more of the following: identification information of the network issue, diagnosis information of the network issue, or recovery information of the network issue, the diagnosis information describes an analysis result of the network issue, and the recovery information describes a recovery status of the network issue. The second apparatus receives the first information about the network issue from the first apparatus, and determines, based on the first information, an operation for processing the network issue.

In a possible design solution, the network issue may include one or more of the following: a network fault, a network exception, or a network performance indicator exception.

In a possible design solution, the identification information of the network issue may include one or more of the following: a type of the network issue, or an object of the network issue. The type of the network issue may include one or more of the following: coverage, a rate, a capacity, a device fault, service experience, mobility, or energy consumption. The coverage describes a coverage issue of a network, the capacity describes a capacity issue of the network, and the mobility describes a mobility issue of the network. The object of the network issue may include one or more of the following: location information (for example, a geographic grid, a geographic area, or longitude and latitude of a geographic grid), a network element, a cell, or a terminal user.

Optionally, the coverage may correspond to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in a network, a mismatch between uplink and downlink coverage of a network, or pilot contamination in a network. The rate may correspond to one or more of the following network issues: the rate is less than a first rate threshold (for example, an average rate is less than an average rate threshold, or a peak rate is less than a peak rate threshold), a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. The capacity may correspond to one or more of the following network issues: network load is greater than a load threshold, network load is unbalanced, or a network is congested. The device fault may correspond to one or more of the following network issues: a base station fault, a fronthaul fault, an optical interface fault, a clock fault, a cell fault, or a standing wave fault. The service experience may correspond to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold. The mean opinion score describes voice or video quality. The mobility may correspond to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. The energy consumption may correspond to one or more of the following network issues: the energy consumption is greater than an energy consumption threshold, or a traffic volume is low but the energy consumption is high (for example, a traffic volume is lower than a traffic volume threshold but the energy consumption is greater than an energy consumption threshold).

In a possible design solution, the diagnosis information of the network issue may include one or more of the following: a cause of the network issue, a recovery capability corresponding to the network issue, a recovery suggestion for the network issue, or a predicted recovery result of the network issue. The recovery capability corresponding to the network issue may include: the first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

In a possible design solution, the recovery information of the network issue may include one or more of the following: a recovery status of the network issue, or a recovery result of the network issue. The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

In a possible design solution, the communication method according to the twelfth aspect may further include: The second apparatus sends a first request to the first apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue. The first apparatus receives the first request from the second apparatus.

In a possible design solution, the communication method according to the twelfth aspect may further include: The second apparatus sends a second request to the first apparatus. The second request carries a network issue subscription requirement condition, and the network issue subscription requirement condition is used to indicate that the first apparatus feeds back the first information if the first information that meets the network issue subscription requirement condition is generated or updated. The first apparatus receives the second request from the second apparatus.

In addition, for technical effect of the communication method according to the twelfth aspect, refer to the technical effect of the network issue information obtaining methods according to the first aspect and the second aspect. Details are not described herein again.

According to a thirteenth aspect, a computer-readable storage medium is provided, including a computer program or instructions. When the computer program or instructions are run on a computer, the computer is enabled to perform the network issue information obtaining method according to any one of the possible implementations of the first aspect or the second aspect.

According to a fourteenth aspect, a computer program product is provided, including a computer program or instructions. When the computer program or the instructions are run on a computer, the computer is enabled to perform the network issue information obtaining method according to any one of the possible implementations of the first aspect or the second aspect.

### BRIEF DESCRIPTION OF DRAWINGS

FIG. 1 is a schematic diagram 1 of an architecture of a communication system according to an embodiment of this application;
FIG. 2 shows an example of the communication system shown in FIG. 1;
FIG. 3 is a schematic flowchart of a network issue information obtaining method according to an embodiment of this application;
FIG. 4 is a schematic diagram 1 of reporting first information about a network issue according to an embodiment of this application;
FIG. 5 is a schematic diagram 2 of reporting first information about a network issue according to an embodiment of this application;
FIG. 6 is a schematic diagram 3 of reporting first information about a network issue according to an embodiment of this application;
FIG. 7 is a schematic diagram 4 of reporting first information about a network issue according to an embodiment of this application;
FIG. 8 is a schematic diagram 5 of reporting first information about a network issue according to an embodiment of this application;
FIG. 9 is a schematic diagram 1 of a structure of a network issue information obtaining apparatus according to an embodiment of this application; and
FIG. 10 is a schematic diagram 2 of a structure of a network issue information obtaining apparatus according to an embodiment of this application.

### DESCRIPTION OF EMBODIMENTS

For ease of understanding solutions in embodiments of this application, related concepts are first briefly described as follows.

### 1. Service operation unit

A service operation unit may also be referred to as a communication service management function (communication service management function) unit, and may provide functions or management services such as charging, settlement, accounting, a customer service, business, network monitoring, communication service life cycle management, and service intent translation. For example, the service operation unit may be a unit in an operator operation system or a vertical service operation system (vertical service operation system).

### 2. Cross domain management function unit

A cross domain management function unit may also be referred to as a network management function (network management function, NMF) unit. The cross domain management function unit may provide one or more of the following functions or management services: life cycle management of a network, deployment of a network, fault management of a network, performance management of a network, configuration management of a network, assurance of a network, optimization of a network, translation of intent from communication service provider (intent from communication service provider, intent-CSP), translation of intent from communication service consumer (intent from communication service consumer, intent-CSC), or the like. The network herein may include one or more of the following: one or more network elements (network elements, NEs), one or more sub-networks, or one or more network slices.

For example, the cross domain management function unit may be any one of the following: a network slice management function (network slice management function, NSMF) unit, a management data analytic function (management data analytic function, MDAF) unit, a cross domain self-organization network function (self-organization network function, SON-function) unit, or a cross domain intent management function unit.

It should be noted that, in some deployment scenarios, the cross domain management function unit may also provide one or more of the following functions or management services: life cycle management of a sub-network, deployment of a sub-network, fault management of a sub-network, performance management of a sub-network, configuration management of a sub-network, assurance of a sub-network, optimization of a sub-network, or translation of intent from a sub-network. The sub-network herein may include a plurality of small sub-networks or a plurality of network slice subnets. For example, one access network sub-network of an operator may include an access network sub-network of a vendor 1 and an access network sub-network of a vendor 2.

### 3. Domain management function unit

A domain management function unit may also be referred to as a sub-network management function (sub-network management function, NMF) unit, or may be referred to as a network element management function (network element management function) unit. The domain management function unit may provide one or more of the following functions or management services: life cycle management of a sub-network or network element, deployment of a sub-network or network element, fault management of a sub-network or network element, performance management of a sub-network or network element, assurance of a sub-network or network element, optimization management of a sub-network or network element, translation of intent from a sub-network or network element, or the like. The sub-network herein may include one or more network elements; or the sub-network herein may also include one or more sub-networks, that is, one or more sub-networks form a sub-network with a larger coverage area; or the sub-network herein may include one or more network slice subnets.

For example, the sub-network may be described in the following manners:
Manner 1: A network in a technical domain, for example, a radio access network, a core network, or a transmission network.
Manner 2: A network of a standard, for example, a global system for mobile communications (global system for mobile communications, GSM) network, a long term evolution (long term evolution, LTE) network, or a 5th generation (5th generation, 5G) mobile communication system network.
Manner 3: A network provided by a vendor, for example, a network provided by a vendor 1.
Manner 4: A network in a geographical area, for example, a network of a factory A, or a network of a prefecture-level city B.

### 4. Network element

A network element is an entity that provides a network service, including a core network element, an access network element, and the like. For example, the core network element may include but is not limited to an access and mobility management function (access and mobility management function, AMF) entity, a session management function (session management function, SMF) entity, a policy control function (policy control function, PCF) entity, a network data analysis function (network data analysis function, NWDAF) entity, a network repository function (network repository function, NRF), a gateway, and the like. The access network element may include but is not limited to various base stations (for example, a next generation NodeB (generation NodeB, gNB) and an evolved NodeB (evolved NodeB, eNB)), a central unit control panel (central unit control panel, CUCP), a central unit (central unit, CU), a distributed unit (distributed unit, DU), a central unit user panel (central unit user panel, CUUP), or the like.

In addition, in embodiments of this application, a network function (network function, NF) may also be referred to as a network element.

### 5. Service-based management architecture (service-based management architecture, SBMA)

A service-based management architecture is a basic architecture of a 5G network, and divides network functions into several "service" modules that can be flexibly invoked. "Services" communicate with each other through interfaces, so that a communication system can be efficient, software-based, and open. Based on the service-based management architecture, an operator can flexibly customize networking based on a service requirement.

The following describes the technical solutions of this application with reference to accompanying drawings.

The technical solutions in embodiments of this application may be applied to various communication systems, for example, a wireless fidelity (wireless fidelity, Wi-Fi) system, a vehicle to everything (vehicle-to-everything, V2X) communication system, a device-to-device (device-to-device, D2D) communication system, an internet of vehicles communication system, a 4th generation (4th generation, 4G) mobile communication system such as a long term evolution system or a worldwide interoperability for microwave access (worldwide interoperability for microwave access, WiMAX) communication system, a 5th generation mobile communication systems such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferable or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. The terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, sometimes a subscript, for example, W₁, may be written incorrectly in a non-subscript form, for example, Wl. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical issues.

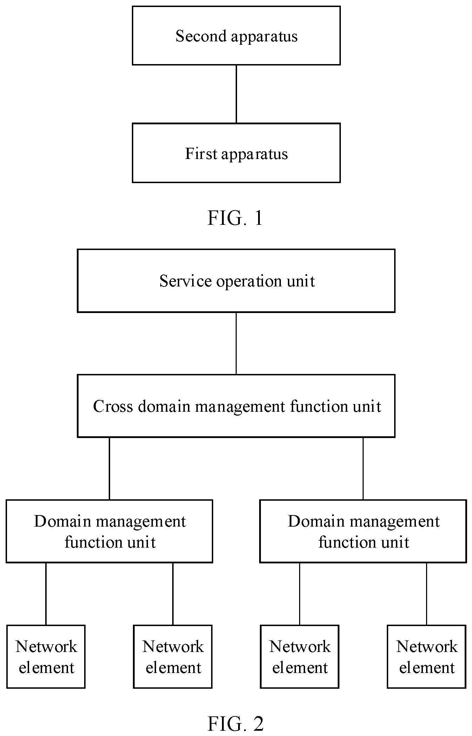

For ease of understanding embodiments of this application, a communication system shown in FIG. 1 is first used as an example to describe in detail a communication system to which embodiments of this application are applicable. For example, FIG. 1 is a schematic diagram 1 of an architecture of a communication system to which a network issue information obtaining method according to embodiments of this application is applicable.

As shown in FIG. 1, the communication system includes a first apparatus and a second apparatus. The first apparatus is connected to the second apparatus, and the second apparatus may send a network target to the first apparatus. For example, the network target may include: An average rate of a network is greater than 10 megabits per second (megabits per second, Mbps), a weak coverage ratio is less than 5%, or a quantity of users whose rate is lower than 5 Mbps accounts for less than 5% of a total quantity of users. The first apparatus may receive the network target, and resolve a network issue based on the network target. For example, the first apparatus may monitor the network, identify the network issue in the network, and diagnose and recover the network issue, so that performance of the network meets the network target, thereby maintaining the network. In other words, the first apparatus may provide a network management service for the second apparatus. The first apparatus may be referred to as a vendor network device, and the second apparatus may be referred to as an operator network device.

In a possible implementation, in the communication system shown in FIG. 1, the first apparatus is configured to determine first information about the network issue, and send the first information to the second apparatus. The first information includes one or more of the following: identification information of the network issue, diagnosis information of the network issue, or recovery information of the network issue, the diagnosis information describes an analysis result of the network issue, and the recovery information describes a recovery status of the network issue. The second apparatus is configured to: receive the first information about the network issue from the first apparatus, and determine, based on the first information, an operation for processing the network issue. Specific implementations and technical effect of the foregoing solutions are described in detail in subsequent method embodiments, and details are not described herein again.

In a service-based management architecture, the second apparatus may be referred to as a management service (management service, MnS) consumer (consumer), and the first apparatus may be referred to as a management service provider (producer).

For example, FIG. 2 shows an example of the communication system shown in FIG. 1. As shown in FIG. 2, the communication system may include a service operation unit, a cross domain management function unit, domain management function units, and network elements. The service operation unit may be connected to one or more cross domain management function units (the example in which the service operation unit is connected to one cross domain management function unit is used in FIG. 2). The cross domain management function unit may be connected to one or more domain management function units. The domain management function unit may be connected to one or more network elements.

The first apparatus and the first apparatus each may be any one of the service operation unit, the cross domain management function unit, the domain management function unit, and the network element. Specifically, when the first apparatus is the service operation unit, the second apparatus may be another service operation unit. When the first apparatus is the cross domain management function unit, the second apparatus may be the service operation unit connected to the cross domain management function unit. When the first apparatus is the domain management function unit, the second apparatus may be the cross domain management function unit, a network data analysis functional entity, or the service operation unit connected to the domain management function unit. When the first apparatus is the network element, the second apparatus may be the domain management function unit, the cross domain management function unit, a network data analysis functional entity, or the service operation unit connected to the network element. It may be understood that, in this embodiment of this application, specific devices or apparatuses that the first apparatus and the second apparatus are in a network is not limited.

It should be noted that the network issue information obtaining method provided in embodiments of this application is applicable between the first apparatus and the second apparatus shown in FIG. 1, for example, between the service operation unit and the cross domain management function unit, and between the cross domain management function unit and the domain management function unit, and between the domain management function unit and the network element. For a specific implementation, refer to the following method embodiment, and details are not described herein again.

It should be noted that, the solutions in embodiments of this application may also be used in another communication system, and a corresponding name may also be replaced with a name of a corresponding function in the another communication system.

It should be understood that FIG. 1 is merely a simplified schematic diagram of an example for ease of understanding. The communication system may further include another network device and/or another terminal device that are/is not shown in FIG. 1.

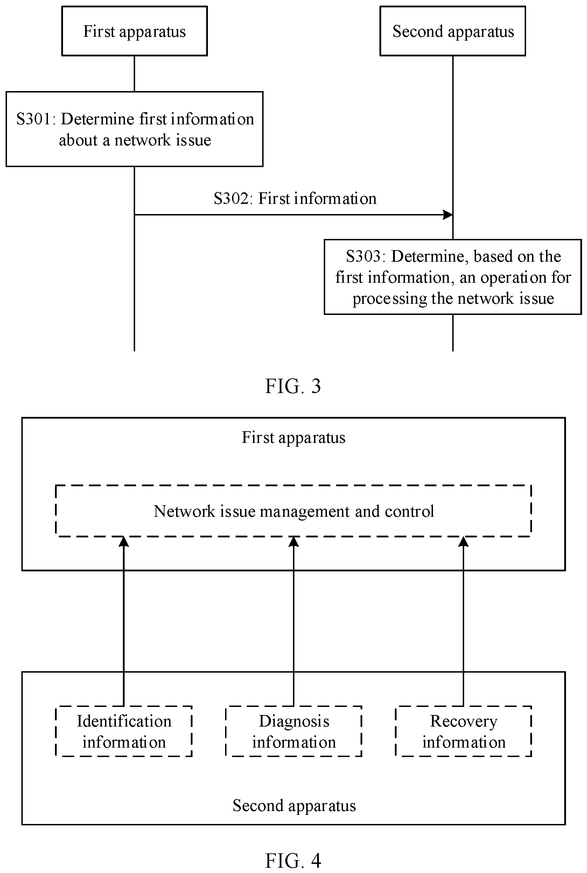

The foregoing describes the communication system provided in embodiments of this application with reference to FIG. 1 and FIG. 2. The following describes in detail the network issue information obtaining method provided in embodiments of this application with reference to FIG. 3 to FIG. 8.

For example, FIG. 3 is a schematic flowchart of a network issue information obtaining method according to an embodiment of this application. The network issue information obtaining method is applicable to communication between the first apparatus and the second apparatus shown in FIG. 1.

As shown in FIG. 3, the network issue information obtaining method includes the following steps.

S301: The first apparatus determines first information about a network issue.

The network issue may include one or more of the following: a network fault, a network exception, or a network performance indicator exception.

For example, the network fault may include a base station fault, a fronthaul fault, an optical interface fault, or the like. The network exception may include a long network delay, a high call drop rate, a low rate, or the like. The network performance indicator exception may include: A weak coverage ratio is greater than 5%, a quantity of users whose rate is lower than 5 Mbps accounts for more than 5% of a total quantity of users, or the like.

Based on the foregoing descriptions about the network issue, a case in which a requirement (for example, a business requirement, a service requirement, or a user requirement) is not met in a network can be referred to as the network issue.

To describe the network issue in the network in detail and accurately, the first information about the network issue may include one or more of the following: identification information of the network issue, diagnosis information of the network issue, or recovery information of the network issue.

A manner of determining the identification information of the network issue may include: The first apparatus monitors the network, to identify the network issue in the network and generate the identification information of the network issue. A manner of determining the diagnosis information of the network issue may include: The first apparatus performs diagnosis analysis on the network issue, and generates the diagnosis information of the network issue, that is, the diagnosis information of the network issue may describe an analysis result of the network issue. A manner of determining the recovery information of the network issue may include: The first apparatus recovers the network issue, and generates the recovery information of the network issue, that is, the recovery information of the network issue may describe a recovery status of the network issue.

To describe the identification information of the network issue in detail and accurately, in some possible embodiments, the identification information of the network issue may include one or more of the following: a type of the network issue, a name of the network issue, or an object of the network issue.

The type of the network issue may include one or more of the following: coverage, a rate, a capacity, a device fault, service experience, mobility, or energy consumption. The coverage describes an issue in network coverage, such as weak coverage and a mismatch between uplink and downlink coverage. The rate describes an issue in a network rate, such as a low average rate and a low peak rate. The capacity describes an issue in a network capacity, for example, network load is unbalanced and the network is congested. The service experience describes an issue in network service experience, such as a long delay and a large delay jitter. The mobility describes an issue in network mobility, such as a frequent ping-pong handover and a high call drop rate. The energy consumption describes an issue in network energy consumption, such as high energy consumption. The device fault describes a fault in a network device, for example, a base station 1 is faulty. The object of the network issue may include one or more of the following: location information (for example, a geographic grid, a geographic area, or longitude and latitude of a geographic grid), a network element, a cell, or a terminal user.

Optionally, when the type of the network issue is the coverage, the name of the network issue may include one or more of the following: A coverage rate is less than a first coverage rate threshold, a coverage rate is greater than a second coverage rate threshold, reference signal received power (reference signal received power, RSRP) is less than a reference signal received power threshold, a signal to interference plus noise ratio is less than a signal to interference plus noise ratio threshold, or there is no coverage. In other words, the coverage may correspond to one or more of the following network issues: A coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage. In addition, the coverage may also correspond to one or more of the following network issues: a coverage vulnerability in the network, a mismatch between uplink and downlink coverage of the network, or pilot contamination in the network. Details are described below.

That the coverage rate is less than the first coverage rate threshold may also be referred to as weak coverage, that the coverage rate is greater than the second coverage rate threshold may also be referred to as over-coverage, that the reference signal received power is less than the reference signal received power threshold may also be referred to as low reference signal received power, and that the signal to interference plus noise ratio is less than the signal to interference plus noise ratio threshold may also be referred to as a small signal to interference plus noise ratio.

The pilot contamination may be a phenomenon that there are many strong pilots at a receiving location, resulting in a case that some strong pilots cannot be added to an activated set of a user device (user equipment, LTE), and these pilot signals cause severe interference to a valid signal.

When the type of the network issue is the rate, the name of the network issue may include one or more of the following: The rate is less than a first rate threshold, a quantity of low-rate users is greater than a first quantity threshold, or a quantity of high-rate users is less than a second quantity threshold. The low-rate user is a user whose rate is less than a second rate threshold, and the high-rate user is a user whose rate is greater than a third rate threshold. In other words, the rate may correspond to one or more of the following network issues: The rate is less than a first rate threshold, a quantity of low-rate users is greater than the first quantity threshold, or a quantity of high-rate users is less than a second quantity threshold. The low-rate user is a user whose rate is less than a second rate threshold, and the high-rate user is a user whose rate is greater than a third rate threshold.

It should be noted that, that the rate is less than the first rate threshold may also be referred to as a low rate, that the quantity of low-rate users is greater than the first quantity threshold may also be referred to as a large quantity of low-rate users, and that the quantity of high-rate users is less than the second quantity threshold may also be referred to as a small quantity of high-rate users. In addition, the rate herein may include an average rate, or may include a peak rate, or the like. For example, the average rate is less than an average rate threshold, and the peak rate is less than a peak rate threshold.

When the type of the network issue is the capacity, the name of the network issue may include one or more of the following: Network load is greater than a load threshold, network load is unbalanced, or the network is congested. In other words, the capacity may correspond to one or more of the following network issues: Network load is greater than a load threshold, network load is unbalanced, or the network is congested.

It should be noted that the network load is greater than the load threshold may also be referred to as high load or overload.

When the type of the network issue is the device fault, the name of the network issue may include one or more of the following: a base station fault, a fronthaul fault, an optical interface fault (an optical fiber interface fault), a clock fault, a cell fault, or a standing wave fault. In other words, the device fault may correspond to one or more of the following network issues: a base station fault, a fronthaul fault, an optical interface fault, a clock fault, a cell fault, or a standing wave fault.

When the type of the network issue is the service experience, the name of the network issue may include one or more of the following: A delay is greater than a delay threshold, a delay jitter is greater than a delay jitter threshold, an access success rate is less than an access success rate threshold, a call drop rate is greater than a call drop rate threshold, or a packet loss rate is greater than a packet loss rate threshold. In other words, the service experience may correspond to one or more of the following network issues: A delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold. The mean opinion score describes voice or video quality, and may be obtained through quantitative measurement of the voice or video quality.

It should be noted that the delay is greater than the delay threshold may also be referred to as a large delay, that the delay jitter is greater than the delay jitter threshold may also be referred to as a large delay jitter, that the access success rate is less than the access success rate threshold may also be referred to as a low access success rate, that the call drop rate is greater than the call drop rate threshold, and that the packet loss rate is greater than the packet loss rate threshold each may also be referred to as a high packet loss rate.

When the type of the network issue is the mobility, the name of the network issue may include one or more of the following: A handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold. In other words, the mobility may correspond to one or more of the following network issues: A handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold.

A premature handover may indicate that a radio link failure (radio link failure, RLF) or a handover failure (handover failure, HOF) occurs in a short time in a handover process or after a user device is handed over to a target cell, and then the user device attempts to reestablish a radio link in a source cell. A delayed handover may indicate that a radio link failure occurs after a user device camps on a cell for a long time, and then the user device initiates a reestablishment request to another cell. The premature handover rate may indicate a ratio of a quantity of premature handovers to a quantity of handover attempts in a unit time period. The delayed handover rate may indicate a ratio of a quantity of delayed handovers to a quantity of handover attempts in a unit time period.

It should be noted that the handover success rate is less than the handover success rate threshold may also be referred to as a low handover success rate, that the premature handover rate is greater than the premature handover rate threshold may also be referred to as a high premature handover rate, that the delayed handover rate is greater than the delayed handover rate threshold may also be referred to as a high delayed handover rate, and that the ping-pong handover rate is greater than the ping-pong handover rate threshold may also be referred to as a frequent ping-pong handover or a large ping-pong handover rate.

When the type of the network issue is the energy consumption, the name of the network issue may include one or more of the following: Energy consumption is greater than an energy consumption threshold, or a traffic volume is low but energy consumption is high (for example, a traffic volume is lower than a traffic volume threshold but energy consumption is greater than an energy consumption threshold). In other words, the energy consumption may correspond to one or more of the following network issues: The energy consumption is greater than an energy consumption threshold, or a traffic volume is low but the energy consumption is high.

It should be noted that the energy consumption is greater than the energy consumption threshold may also be referred to as high energy consumption.

Optionally, each piece of identification information of the network issue may correspond to an identifier of the network issue (issue id). In other words, for identification information of a network issue, an identifier may be allocated to the identification information of the network issue, so that identification information of different network issues can be easily distinguished.

The identification information of the network issue is described below by using an example with reference to Table 1.

Table 1 is a table of identification information of a plurality of network issues determined by the first apparatus. Identification information of the network issue corresponding to an identifier 1 is as follows: A coverage issue exists at a location 1 in the network, and specifically, a coverage rate at the location 1 is less than 75%; identification information of the network issue corresponding to an identifier 2 is as follows: A rate issue exists in a cell 1 in the network, and specifically, a quantity of high-rate users in the cell 1 is less than 35; ...; and identification information of the network issue corresponding to an identifier N is as follows: A device fault issue exists in a network element 1, and specifically, a network element 1 is faulty.

**Table 1**

| Identifiers of the network issues | Identification information of the network issues | | |
|---|---|---|---|
| | Types of the network issues | Names of the network issues | Objects of the network issues |
| Identifier 1 | Coverage | The coverage rate is less than 75%. | Location 1 |
| Identifier 2 | Rate | The quantity of high-rate users is less than 35. | Cell 1 |
| ... | ... | ... | ... |
| Identifier N | Device fault | Base station fault | Network element 1 |

For example, refer to Table 1. It is assumed that the first apparatus sends, to the second apparatus, the identification information of the network issue corresponding to the identifier 2, the second apparatus may determine, in real time based on the identification information of the network issue, an operation for processing the network issue, for example, may determine to adjust a configuration parameter of the cell 1, so as to resolve the rate issue in the cell 1. In other words, the identification information of the network issue is classified in detail, so that the identification information of the network issue is more accurate and detailed. The second apparatus device can obtain the detailed identification information of the network issue in real time, and accurately locate the network issue, thereby improving precision of identifying the network issue by the operator network device. In addition, the operation for processing the network issue can be targetedly determined. This can accurately and effectively resolve the network issue in the network, and improve network operation&maintenance efficiency.

Optionally, the identification information of the network issues may be implemented by using data structures in Table 2 and Table 3. Specifically, Table 2 is a table of objects of the network issues (information object class, IOC), and includes the following pieces of data: an attribute name (attribute name), whether readable (is readable), and whether writable (is writable). The attribute name in Table 2 includes the identification information of the network issues and the identifiers of the network issues. The identification information of the network issues may be a pointer pointing to Table 3.

Table 3 is a data type (data type) table, and includes the following pieces of data: an attribute name, whether readable, and whether writable. The attribute name in Table 3 includes the types of the network issues, the names of the network issues, or the objects of the network issues.

In other words, the identification information of the network issues may be generated based on the data structures shown in Table 2 and Table 3.

**Table 2**

| Attribute name | Whether readable | Whether writable |
|---|---|---|
| Identifiers of the network issues | Yes (ture) | No (false) |
| Identification information of the network issues (pointing to Table 3) | Yes | No |

**Table 3**

| Attribute name | Whether readable | Whether writable |
|---|---|---|
| Types of the network issues | Yes | No |
| Names of the network issues | Yes | No |
| Objects of the network issues | Yes | No |

Optionally, the identification information of the network issue may be included in a network issue discovery notification. In addition, the network issue discovery notification may include a managed object added notification or a network issue added notification.

To describe the diagnosis information of the network issue in detail and accurately, in some possible embodiments, the diagnosis information of the network issue may include one or more of the following: a cause of the network issue, a recovery capability corresponding to the network issue, a recovery suggestion for the network issue, or a predicted recovery result of the network issue.

The cause of the network issue may include an inappropriate cell parameter configuration, for example, an inappropriate massive (massive) multiple input multiple output (massive multiple input multiple output, MIMO) pattern (pattern) parameter configuration, interference between cells, apparatus damage (for example, a base station damage), and the like. The recovery capability corresponding to the network issue may include: The first apparatus can recover the network issue or the first apparatus cannot recover the network issue. The recovery suggestion for the network issue may include an operation of the first apparatus to recover the network issue. The predicted recovery result of the network issue may include a predicted network performance indicator obtained after the network issue is recovered.

In addition, the cause of the network issue may also be referred to as a root cause of the network issue, a reason of the network issue, a root reason of the network issue, or a root of the network issue. The network issue that the first apparatus can recover may be referred to as recoverable, and the network issue that the first apparatus cannot recover may be referred to as unrecoverable.

The diagnosis information of the network issue is described below by using an example with reference to Table 4.

Table 4 is a table of diagnosis information of the plurality of network issues determined by the first apparatus. Diagnosis information of the network issue corresponding to an identifier 1 is as follows: A cause of the network issue is an inappropriate parameter configuration, the network issue is recoverable, a recovery suggestion includes a recommended parameter configuration set, and a predicted recovery result is that a coverage rate is greater than 80%; diagnosis information of the network issue corresponding to an identifier 2 is as follows: A cause of the network issue is interference between cells, the network issue is recoverable, the recovery suggestion includes a recommended cell parameter, and a predicted recovery result is that a quantity of high-rate users is greater than 50; ...; and diagnosis information of the network issue corresponding to an identifier N is as follows: A cause of the network issue is apparatus damage, the network issue is recoverable, a recovery suggestion is replacing a network element 1, and a predicted recovery result is that the network element 1 is successfully recovered.

For example, refer to Table 4. It is assumed that the first apparatus sends, to the second apparatus, the diagnosis information of the network issue corresponding to the identifier 2, the second apparatus may determine, in real time based on the diagnosis information of the network issue, an operation for processing the network issue. For example, the first apparatus may be indicated to configure a cell based on the recommended cell parameter, so as to resolve the network issue. In other words, the diagnosis information of the network issue is classified in detail, so that the diagnosis information of the network issue is more accurate and detailed. The second apparatus device can obtain the detailed diagnosis information of the network issue in real time, and accurately locate the network issue, thereby improving precision of identifying the network issue by the operator network device. In addition, the operation for processing the network issue can be targetedly determined. This can accurately and effectively resolve the network issue in the network, and improve network operation&maintenance efficiency.

**Table 4**

| Identifiers of the network issues | Diagnosis information of the network issues | | | |
|---|---|---|---|---|
| | Causes of the network issues | Recovery capacities corresponding to the network issues | Recovery suggestions for the network issues | Predicted recovery results of the network issues |
| Identifier 1 | Inappropriate parameter configuration | Recoverable | Recommended parameter configuration set | A coverage rate is greater than 80%. |
| Identifier 2 | Interference between cells | Recoverable | Recommended cell parameter | A quantity of high-rate users is greater than 50. |
| ... | ... | ... | ... | ... |
| Identifier N | Apparatus damage | Recoverable | Replacing a network element 1 | The network element 1 is successfully recovered. |

Optionally, the diagnosis information of the network issues may be implemented by using data structures in Table 5 and Table 6. Specifically, Table 5 is a table of objects of the network issues, and includes the following pieces of data: an attribute name, whether readable, and whether writable. The attribute name in Table 5 includes the diagnosis information of the network issues and the identifiers of the network issues. The diagnosis information of the network issues may be a pointer pointing to Table 6.

Table 6 is a data type table, and includes the following pieces of data: an attribute name, whether readable, and whether writable. The attribute name in Table 6 includes the causes of the network issues, the recovery capabilities corresponding to the network issues, the recovery suggestions for the network issue, and the predicted recovery results of the network issues.

In other words, the diagnosis information of the network issues may be generated based on the data structures shown in Table 5 and Table 6.

**Table 5**

| Attribute name | Whether readable | Whether writable |
|---|---|---|
| Identifiers of the network issues | Yes | No |
| Diagnosis information of the network issues (pointing to Table 6) | Yes | No |

**Table 6**

| Attribute name | Whether readable | Whether writable |
|---|---|---|
| Causes of the network issues | Yes | No |
| Recovery capacities corresponding to the network issues | Yes | No |
| Recovery suggestions for the network issues | Yes | No |
| Predicted recovery results of the network issues | Yes | No |

Optionally, the diagnosis information of the network issue may be included in a network issue diagnosis notification. In addition, the network issue diagnosis notification may include a network issue update notification or a managed object attribute value change notification.

To describe the recovery information of the network issue in detail and accurately, in some possible embodiments, the recovery information of the network issue may include one or more of the following: a recovery status of the network issue or a recovery result of the network issue. The recovery status of the network issue may include not recovered or being recovered, and the recovery result of the network issue may include successfully recovered, or failed to be recovered. In other words, the recovery information of the network issue may include one or more of the following: not recovered, being recovered, successfully recovered, or failed to be recovered.

It should be noted that the recovery information of the network issue may also be referred to as network issue recovery information.

The recovery information of the network issue is described below by using an example with reference to Table 7.

Table 7 is a table of recovery information of the plurality of network issues determined by the first apparatus. Recovery information of the network issue corresponding to an identifier 1 is being recovered; diagnosis information of the network issue corresponding to an identifier 2 is not recovered; ...; and diagnosis information of the network issue corresponding to an identifier N is successfully recovered.

For example, refer to Table 7. It is assumed that the first apparatus sends, to the second apparatus, the recovery information of the network issue corresponding to the identifier 2, the second apparatus may determine, in real time based on the recovery information of the network issue, an operation for processing the network issue, for example, may periodically query a recovery progress of the network issue, so as to targetedly resolve the network issue. In other words, the recovery information of the network issue is classified in detail, so that the recovery information of the network issue is more accurate and detailed. The second apparatus can obtain the detailed recovery information of the network issue in real time, and accurately locate the network issue, thereby improving precision of identifying the network issue by the operator network device. In addition, the operation for processing the network issue can be targetedly determined, so that the network issue in the network can be accurately and effectively resolved, and network operation&maintenance efficiency can be improved.

**Table 7**

| Identifiers of the network issues | Recovery information of the network issues |
|---|---|
| Identifier 1 | Being recovered |
| Identifier 2 | Not recovered |
| ... | ... |
| Identifier N | Successfully recovered |

Optionally, the diagnosis information of the network issues may be implemented by using data structures in Table 8 and Table 9. Specifically, Table 8 is a table of objects of the network issues, and includes the following pieces of data: an attribute name, whether readable, and whether writable. The attribute name in Table 8 includes recovery information of the network issues and identifiers of the network issues. The recovery information of the network issues may be a pointer pointing to Table 9.

Table 9 is a data type table, and includes the following pieces of data: an attribute name, whether readable, and whether writable. The attribute name in Table 9 includes recovery statuses of the network issues and recovery results of the network issues.

In other words, the recovery information of the network issues may be generated based on the data structures shown in Table 8 and Table 9.

**Table 8**

| Attribute name | Whether readable | Whether writable |
|---|---|---|
| Identifiers of the network issues | Yes | No |
| Recovery information of the network issues (pointing to Table 9) | Yes | No |

**Table 9**

| Attribute name | Whether readable | Whether writable |
|---|---|---|
| Recovery statuses of the network issues | Yes | No |
| Recovery results of the network issues | Yes | No |

Optionally, the recovery information of the network issue may be included in a network issue recovery notification. In addition, the network issue recovery notification may include a network issue update notification or a managed object attribute value change notification.

To enable the second apparatus to obtain a specified network issue in time, in some possible embodiments, before the first apparatus determines first information about a network issue in S301, the network issue information obtaining method shown in FIG. 3 may further include the following steps:
Step 1: The second apparatus sends a first request to the first apparatus, and the first apparatus receives the first request from the second apparatus.

The first request may include one or more of the following: a network issue query condition or network issue indication information.

The network issue query condition is used to indicate the first apparatus to feed back the first information that meets the network issue query condition. For example, refer to Table 4. It is assumed that the network issue query condition is used to indicate to feed back first information about a recoverable network issue, the first apparatus may send, to the second apparatus, the identification information of the network issue, the diagnosis information of the network issue, and the recovery information of the network issue that correspond to the identifier 1.

Based on the foregoing description of the network issue query condition, it can be learned that the network issue query condition may include specified query information. The specified query information may include one or more of various types of information included in the first information about the network issue. For example, the specified query information may include recoverable, the coverage, the rate, and the like; or the specified query information may include the object (such as the location information) of the network issue.

The network issue indication information indicates the first apparatus to feed back one or more of the following: the identification information of the network issue, the diagnosis information of the network issue, or the recovery information of the network issue. For example, it is assumed that the network issue indication information indicates to feed back the identification information of the network issue and the diagnosis information of the network issue, the first apparatus may send the identification information of the network issue and the diagnosis information of the network issue, and feed back information about the specified network issue to the second apparatus in time.

It can be learned from the foregoing description of step 1 that the second apparatus can obtain the specified network issue in time by sending the first request to the vendor network device. This can manage, control, and resolve the specified network issue and improve network operation&maintenance efficiency.

It should be noted that the first request may implement a query (query) function, and may also be referred to as a query request.

To enable the second apparatus to continuously obtain a specified and latest network issue, in some other possible embodiments, before the first apparatus determines first information about a network issue in S301, the network issue information obtaining method shown in FIG. 3 may further include the following steps:
Step 2: The second apparatus sends a second request to the first apparatus, and the first apparatus receives the second request from the second apparatus.

The second request carries a network issue subscription requirement condition, and the network issue subscription requirement condition is used to indicate that the first apparatus feeds back the first information if the first information that meets the network issue subscription requirement condition is generated or updated.

For example, it is assumed that the network issue subscription requirement condition is used to indicate that the first apparatus feeds back the first information if the first information about the recoverable network issue is generated or updated. In other words, the second request is sent to the first apparatus, so that the first apparatus is enabled to continuously send the first information about the specified and latest network issue to the second apparatus.

Based on the foregoing description of the network issue subscription requirement condition, it can be learned that the network issue subscription requirement condition may include specified subscription information. The specified subscription information may include one or more of various information included in the first information about the network issue. For example, the specified subscription information may include the coverage, the rate, and the location; or the specified subscription information may include the object (such as the location information) of the network issue.

It can be learned from the foregoing description of step 2 that the second apparatus can continuously obtain the specified and latest network issue by sending the second request to the vendor network device. This can manage, control, and resolve the specified network issue in time, and improve network operation&maintenance efficiency.

It should be noted that the second request may implement a subscription (subscription) function, and may also be referred to as a subscription request.

It may be understood that at least one of step 1 and step 2 may be performed. In addition, when both step 1 and step 2 are performed, step 1 may be performed before step 2, or may be performed after step 2.

S302: The first apparatus sends the first information to the second apparatus, and the second apparatus receives the first information from the first apparatus.

With reference to the foregoing descriptions of the first information about the network issue in Table 1, Table 4, and Table 7, it can be learned that the first apparatus may send at least one of the identification information of the network issue, the diagnosis information of the network issue, and the recovery information of the network issue to the second apparatus. In some possible embodiments, that the first apparatus sends the first information to the second apparatus may include the following several possible implementations:
Implementation 1: The identification information of the network issue, the diagnosis information of the network issue, and the recovery information of the network issue are separately sent.

Optionally, when receiving the first request and/or the second request, the first apparatus may separately send the identification information of the network issue, the diagnosis information of the network issue, and the recovery information of the network issue to the second apparatus. As shown in FIG. 4, the first apparatus sends the identification information of the network issue to the second apparatus when receiving the query request and/or the subscription request of the identification information of the network issue from the second apparatus; the first apparatus sends the diagnosis information of the network issue to the second apparatus when receiving the query request and/or the subscription request of the diagnosis information of the network issue from the second apparatus; and the first apparatus sends the recovery information of the network issue to the second apparatus when receiving the query request and/or the subscription request of the recovery information of the network issue from the second apparatus.

Implementation 2: The identification information of the network issue and the diagnosis information of the network issue are sent in combination.

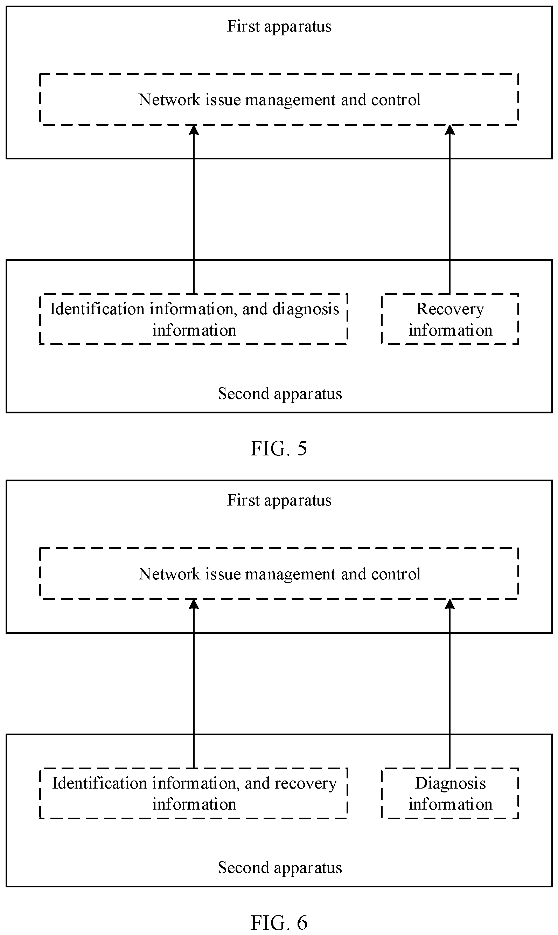

As shown in FIG. 5, the first apparatus may send the identification information of the network issue and the diagnosis information of the network issue to the second apparatus in combination, so that the second apparatus can obtain the identification information of the network issue and the diagnosis information of the network issue when the first apparatus sends information to the second apparatus once. A quantity of times of information exchange between the apparatuses can be reduced, and the second apparatus can obtain the identification information and the diagnosis information in time. This can more quickly determine the operation for processing the network issue and improve network operation&maintenance efficiency.

Optionally, when receiving the first request and/or the second request, the first apparatus may send the identification information of the network issue and the diagnosis information of the network issue to the second apparatus in combination.

Implementation 3: The identification information of the network issue and the recovery information of the network issue are sent in combination.

As shown in FIG. 6, the first apparatus may send the identification information of the network issue and the recovery information of the network issue to the second apparatus in combination, so that the second apparatus can obtain the identification information of the network issue and the recovery information of the network issue when the first apparatus sends information to the second apparatus once. A quantity of times of information exchange between the apparatuses can be reduced, and the second apparatus can obtain the identification information and the recovery information in time. This can more quickly determine the operation for processing the network issue and improve network operation&maintenance efficiency.

Optionally, when receiving the first request and/or the second request, the first apparatus may send the identification information of the network issue and the recovery information of the network issue to the second apparatus in combination.

Implementation 4: The diagnosis information of the network issue and the recovery information of the network issue are sent in combination.

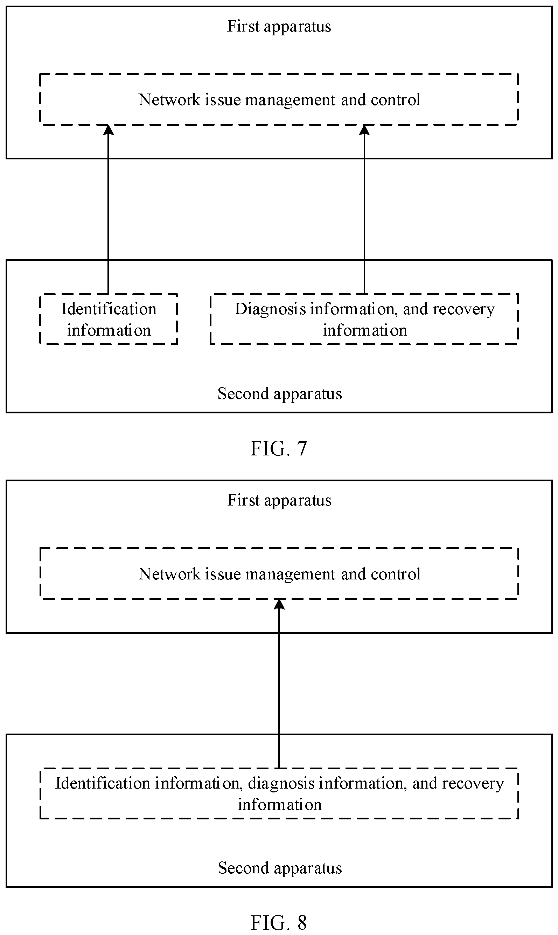

As shown in FIG. 7, the first apparatus may send the diagnosis information of the network issue and the recovery information of the network issue to the second apparatus in combination, so that the second apparatus can obtain the diagnosis information of the network issue and the recovery information of the network issue when the first apparatus sends information to the second apparatus once. A quantity of times of information exchange between the apparatuses can be reduced, and the second apparatus can obtain the diagnosis information and the recovery information in time. This can more quickly determine the operation for processing the network issue and improve network operation&maintenance efficiency.

Optionally, when receiving the first request and/or the second request, the first apparatus may send the diagnosis information of the network issue and the recovery information of the network issue to the second apparatus in combination.

Implementation 5: The identification information of the network issue, the diagnosis information of the network issue, and the recovery information of the network issue are sent in combination.

As shown in FIG. 8, the first apparatus may send the identification information of the network issue, the diagnosis information of the network issue, and the recovery information of the network issue to the second apparatus in combination, so that the second apparatus can obtain the identification information of the network issue, the diagnosis information of the network issue, and the recovery information of the network issue when the first apparatus sends the information to the second apparatus once. A quantity of times of information exchange between the apparatuses can be reduced, and the second apparatus can obtain the identification information, the diagnosis information of the network issue, and the recovery information in time. This can more quickly determine the operation for processing the network issue and improve network operation&maintenance efficiency.

Optionally, when receiving the first request and/or the second request, the first apparatus may send the identification information of the network issue, the diagnosis information of the network issue, and the recovery information of the network issue to the second apparatus in combination.

S303: The second apparatus determines, based on the first information, the operation for processing the network issue.

The second apparatus may further send the operation for processing the network issue to the first apparatus, so that the first apparatus manages, controls, and resolves the network issue based on the operation for processing the network issue.

The following provides descriptions with several examples.

Example 1: It is assumed that the identification information of the network issue included in the first information is "A coverage rate of a geographical grid 1 is less than a coverage rate threshold 75%". The second apparatus may indicate the first apparatus to adjust configuration parameters of one or more network elements in the geographical grid 1, for example, increase transmit power of an access network device deployed in the geographical grid 1, so that the coverage rate of the geographical grid 1 is adjusted to be greater than or equal to 75%.

Example 2: It is assumed that the diagnosis information of the network issue included in the first information is "A parameter configuration of a base station 1 is inappropriate, the network issue is recoverable, a recovery suggestion is performing configuration based on a recommended parameter configuration set, and a predicted recovery result is that a coverage rate of a geographical grid 1 is greater than a coverage rate threshold 80%". The second apparatus may indicate the first apparatus to configure the base station 1 based on the recommended parameter configuration set, to adjust the coverage rate of the geographical grid 1 to be greater than 80%.

Example 3: It is assumed that the recovery information of the network issue included in the first information is "not recovered". The second apparatus may indicate the first apparatus to recover the network issue corresponding to the recovery information, so as to recover the network issue in time.

Example 4: It is assumed that the first information includes the identification information of the network issue and the diagnosis information of the network issue. The identification information is "A quantity of high-rate users in a cell 1 is less than a second quantity threshold 35". The diagnosis information is as follows: "A cause of the network issue is interference between the cell 1 and a cell 2, the network issue is recoverable, a recovery suggestion is configuring the cell 1 and the cell 2 based on recommended cell parameters, and a predicted recovery result is that a quantity of high-rate users in the cell 1 is greater than 50%. The second apparatus may indicate the first apparatus to configure the cell 1 and the cell 2 based on the recommended cell parameters, so that the quantity of high-rate users in the cell 1 is greater than 50.

Example 5: It is assumed that the first information includes the diagnosis information of the network issue and the recovery information of the network issue. The diagnosis information is as follows: "Load of a cell 1 is unbalanced, the network issue is recoverable, a recovery suggestion is adjusting the load of the cell 1, and a predicted recovery result is that the load of the cell 1 is balanced". The recovery information is "not recovered". The second apparatus may indicate the first apparatus to adjust the load of the cell 1, so that the load of the cell 1 is balanced.

Example 6: It is assumed that the first information includes the identification information of the network issue, the diagnosis information of the network issue, and the recovery information of the network issue. The identification information is a "network element 1". The diagnosis information is as follows: "recoverable and a predicted recovery result is that the network element 1 is successfully recovered". The recovery information is "not recovered". The second apparatus may indicate the first apparatus to recover the network element 1, for example, the first apparatus adjusts a configuration parameter and load of the network element 1, so as to recover the network element 1 in time.

Based on the network issue information obtaining method in FIG. 3, the first apparatus may be the vendor network device, and the second apparatus may be the operator network device. The vendor network device can send the first information about the network issue to the operator network device in real time. The operator network device can determine, in real time based on the first information, the operation for processing the network issue. In other words, the operator network device can manage, control, and resolve the network issue in the network in real time. This can improve network operation&maintenance efficiency. In addition, when the network issue includes one or more of the following: the network fault, the network exception, or the network performance indicator exception, the operator network device can further manage, control, and resolve the network issue in the network, such as the network fault, the network exception, or the network performance indicator exception, in real time. This can further improve network operation&maintenance efficiency. In addition, information such as the network fault, the network exception, or the network performance indicator exception may be integrated into one piece of information (namely, the network issue), so that a plurality of interfaces between the first apparatus and the second apparatus can be integrated into one interface. This reduces interface interaction complexity, improves information integration efficiency, and further improves network operation&maintenance efficiency.

In addition, for example, if the vendor network device detects that a weak-coverage network issue in an area 1, but actually because the area 1 has a few users, the weak-coverage network issue in the area 1 does not need to be resolved. After receiving the network issue, the operator network device may indicate the vendor network device to ignore the network issue. In other words, the operator network device may further send the operation for processing the network issue to the vendor network device, so that the vendor network device resolves a network issue that the operator network device expects to resolve, so as to prevent the vendor network device from resolving a network issue that the operator network device does not expect to resolve. This can further improve network operation &maintenance efficiency.

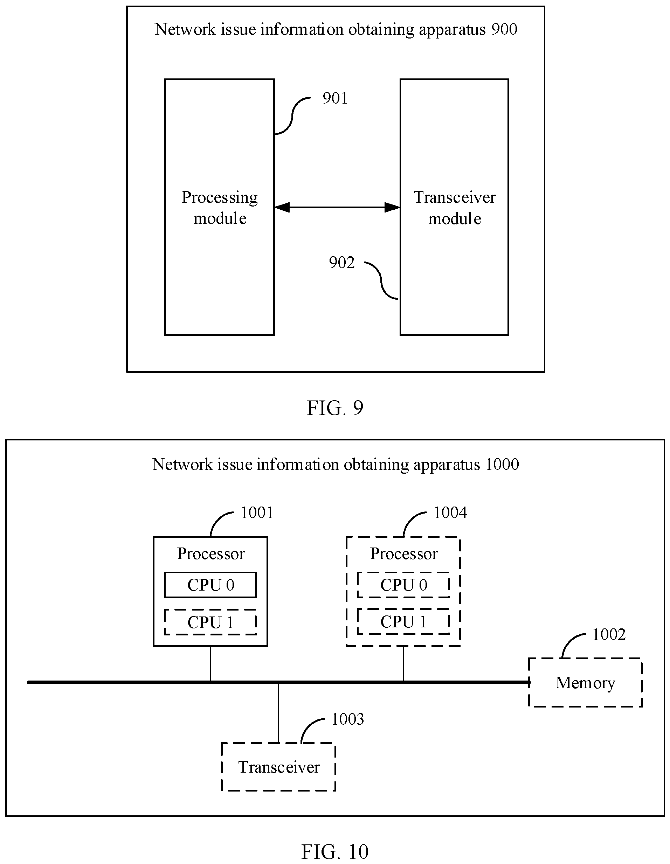

The foregoing describes in detail the network issue information obtaining method provided in embodiments of this application with reference to FIG. 3 to FIG. 8. With reference to FIG. 9 and FIG. 10, the following describes in detail a network issue information obtaining apparatus configured to perform the network issue information obtaining method provided in embodiments of this application.

For example, FIG. 9 is a schematic diagram 1 of a structure of a network issue information obtaining apparatus according to an embodiment of this application. As shown in FIG. 9, the network issue information obtaining apparatus 900 includes a processing module 901 and a transceiver module 902. For ease of description, FIG. 9 shows only main components of the network issue information obtaining apparatus.

In some embodiments, the network issue information obtaining apparatus 900 is applicable to the communication system shown in FIG. 1, and performs a function of the first apparatus in the network issue information obtaining method shown in FIG. 3.

The processing module 901 is configured to determine first information about a network issue. The first information includes one or more of the following: identification information of the network issue, diagnosis information of the network issue, or recovery information of the network issue, the diagnosis information describes an analysis result of the network issue, and the recovery information describes a recovery status of the network issue.

The transceiver module 902 is configured to send the first information to a second apparatus.

It should be noted that for specific implementations of the network issue, the identification information of the network issue, the diagnosis information of the network issue, and the recovery information of the network issue, refer to corresponding descriptions in the network issue information obtaining method shown in FIG. 3, and details are not described herein again.

In a possible design solution, the transceiver module 902 is further configured to receive a first request from the second apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue.

In a possible design solution, the transceiver module 902 is further configured to receive a second request from the second apparatus. The second request carries a network issue subscription requirement condition, and the network issue subscription requirement condition is used to indicate that the first apparatus feeds back the first information if the first information that meets the network issue subscription requirement condition is generated or updated.

Optionally, the transceiver module 902 may include a receiving module and a sending module (not shown in FIG. 9). The sending module is configured to implement a sending function of the network issue information obtaining apparatus 900, and the receiving module is configured to implement a receiving function of the network issue information obtaining apparatus 900.

Optionally, the network issue information obtaining apparatus 900 may further include a storage module (not shown in FIG. 9), and the storage module stores a program or instructions. When the processing module 901 executes the program or the instructions, the network issue information obtaining apparatus 900 may perform a function of the first apparatus in the network issue information obtaining method shown in FIG. 3.

It should be understood that the processing module 901 in the network issue information obtaining apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the network issue information obtaining apparatus 900 may be a vendor network device, or may be a chip (system) or another component or part disposed in the vendor network device, or may be an apparatus including the vendor network device. This is not limited in this application.

In addition, for technical effect of the network issue information obtaining apparatus 900, refer to the technical effect of the network issue information obtaining method shown in FIG. 3, and details are not described herein again.

In some other embodiments, the network issue information obtaining apparatus 900 is applicable to the communication system shown in FIG. 1, and performs a function of the second apparatus in the network issue information obtaining method shown in FIG. 3.

The transceiver module 902 is configured to receive first information about a network issue from a first apparatus. The first information includes one or more of the following: identification information of the network issue, diagnosis information of the network issue, or recovery information of the network issue, the diagnosis information describes an analysis result of the network issue, and the recovery information describes a recovery status of the network issue.

The processing module 901 is configured to determine, based on the first information, an operation for processing the network issue.

It should be noted that for specific implementations of the network issue, the identification information of the network issue, the diagnosis information of the network issue, and the recovery information of the network issue, refer to corresponding descriptions in the network issue information obtaining method shown in FIG. 3, and details are not described herein again.

In a possible design solution, the transceiver module 902 is further configured to send a first request to the first apparatus. The first request may include one or more of the following: a network issue query condition or network issue indication information. The network issue query condition is used to indicate the first apparatus to feed back the first information that meets the network issue query condition. The network issue indication information indicates the first apparatus to feed back one or more of the following: the identification information of the network issue, the diagnosis information of the network issue, or the recovery information of the network issue.

In a possible design solution, the transceiver module 902 is further configured to send a second request to the first apparatus. The second request carries a network issue subscription requirement condition, and the network issue subscription requirement condition is used to indicate that the first apparatus feeds back the first information if the first information that meets the network issue subscription requirement condition is generated or updated.

Optionally, the transceiver module 902 may include a receiving module and a sending module (not shown in FIG. 9). The sending module is configured to implement a sending function of the network issue information obtaining apparatus 900, and the receiving module is configured to implement a receiving function of the network issue information obtaining apparatus 900.

Optionally, the network issue information obtaining apparatus 900 may further include a storage module (not shown in FIG. 9), and the storage module stores a program or instructions. When the processing module 901 executes the program or the instructions, the network issue information obtaining apparatus 900 may perform a function of the second apparatus in the network issue information obtaining method shown in FIG. 3.

It should be understood that the processing module 901 in the network issue information obtaining apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the network issue information obtaining apparatus 900 may be the operator network device shown in FIG. 1, or may be a chip (system) or another component or part disposed in the operator network device, or an apparatus including the operator network device. This is not limited in this embodiment of this application.

In addition, for technical effect of the network issue information obtaining apparatus 900, refer to the technical effect of the network issue information obtaining method shown in FIG. 3, and details are not described herein again.

For example, FIG. 10 is a schematic diagram 2 of a structure of a network issue information obtaining apparatus according to an embodiment of this application. The network issue information obtaining apparatus may be a vendor network device or an operator network device, or may be a chip (system) or another component or part that may be disposed in the vendor network device or the operator network device. As shown in FIG. 10, the network issue information obtaining apparatus 1000 may include a processor 1001. Optionally, the network issue information obtaining apparatus 1000 may further include a memory 1002 and/or a transceiver 1003. The processor 1001 is coupled to the memory 1002 and the transceiver 1003, for example, may be connected to the memory and the transceiver through a communication bus.

The following describes components of the network issue information obtaining apparatus 1000 in detail with reference to FIG. 10.

The processor 1001 is a control center of the network issue information obtaining apparatus 1000, and may be a processor, or may be a collective name of a plurality of processing elements. For example, the processor 1001 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1001 may perform various functions of the network issue information obtaining apparatus 1000 by running or executing a software program stored in the memory 1002 and invoking data stored in the memory 1002.

During a specific implementation, in an embodiment, the processor 1001 may include one or more CPUs, for example, a CPU 0 and a CPU 1 in FIG. 10.

During a specific implementation, in an embodiment, the network issue information obtaining apparatus 1000 may further include a plurality of processors, for example, the processor 1001 and a processor 1004 shown in FIG. 2. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for performing the solutions of this application, and the processor 1001 controls execution of the software program. For a specific implementation, refer to the foregoing method embodiment, and details are not described herein again.

Optionally, the memory 1002 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 1002 may be integrated with the processor 1001, or may exist independently, and is coupled to the processor 1001 through an interface circuit (not shown in FIG. 10) of the network issue information obtaining apparatus 1000. This is not specifically limited in this embodiment of this application.

The transceiver 1003 is configured to communicate with another network issue information obtaining apparatus. For example, the network issue information obtaining apparatus 1000 is a terminal device, and the transceiver 1003 may be configured to communicate with a network device or communicate with another terminal device. For another example, the network issue information obtaining apparatus 1000 is a network device, and the transceiver 1003 may be configured to communicate with a terminal device or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the network issue information obtaining apparatus 1000. This is not specifically limited in this embodiment of this application.

It should be noted that the structure of the network issue information obtaining apparatus 1000 shown in FIG. 10 does not constitute a limitation on the network issue information obtaining apparatus. An actual network issue information obtaining apparatus may include more or fewer components than those shown in the figure, or some components may be combined, or different component arrangements may be used.

In addition, for technical effect of the network issue information obtaining apparatus 1000, refer to the technical effect of the network issue information obtaining method in the foregoing method embodiment, and details are not described herein again.

An embodiment of this application provides a communication system. The communication system includes the foregoing first apparatus and second apparatus, and the first apparatus is connected to the second apparatus. The first apparatus is configured to perform S301 and S302 in the method embodiment shown in FIG. 3. The second apparatus is configured to perform S302 and S303 in the method embodiment shown in FIG. 3. In addition, for a specific implementation and technical effect of the communication system, refer to the network issue information obtaining method in the foregoing method embodiment, and details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network issue information obtaining method, applied to a first apparatus, wherein the method comprises:
determining first information about a network issue, wherein the first information comprises one or more of the following: identification information of the network issue, diagnosis information of the network issue, or recovery information of the network issue, the diagnosis information describes an analysis result of the network issue, and the recovery information describes a recovery status of the network issue; and
sending the first information to a second apparatus.

2. The method according to claim 1, wherein the network issue comprises one or more of the following: a network fault, a network exception, or a network performance indicator exception.

3. The method according to claim 1 or 2, wherein the identification information of the network issue comprises one or more of the following: a type of the network issue, or an object of the network issue;
the type of the network issue comprises one or more of the following: coverage, a rate, a capacity, a device fault, service experience, mobility, or energy consumption; and
the object of the network issue comprises one or more of the following: location information, a network element, a cell, or a terminal user.

4. The method according to claim 3, wherein the coverage corresponds to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage;
the rate corresponds to one or more of the following network issues: the rate is less than a first rate threshold, a quantity of low-rate users is greater than a first quantity threshold, or a quantity of high-rate users is less than a second quantity threshold, wherein the low-rate user is a user whose rate is less than a second rate threshold, and the high-rate user is a user whose rate is greater than a third rate threshold;
the capacity corresponds to one or more of the following network issues: network load is greater than a load threshold, network load is unbalanced, or a network is congested;
the device fault corresponds to one or more of the following network issues: a base station fault, a fronthaul fault, an optical interface fault, a clock fault, a cell fault, or a standing wave fault;
the service experience corresponds to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold, wherein the mean opinion score describes voice or video quality;
the mobility corresponds to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold; and
the energy consumption corresponds to one or more of the following network issues: the energy consumption is greater than an energy consumption threshold, or a traffic volume is lower than a traffic volume threshold but the energy consumption is greater than an energy consumption threshold.

5. The method according to claim 1 or 2, wherein the diagnosis information of the network issue comprises one or more of the following: a cause of the network issue, a recovery capability corresponding to the network issue, a recovery suggestion for the network issue, or a predicted recovery result of the network issue;
the recovery capability corresponding to the network issue comprises: the first apparatus can recover the network issue or the first apparatus cannot recover the network issue;
the recovery suggestion for the network issue comprises an operation of the first apparatus to recover the network issue; and
the predicted recovery result of the network issue comprises a predicted network performance indicator obtained after the network issue is recovered.

6. The method according to claim 1 or 2, wherein the recovery information of the network issue comprises one or more of the following: not recovered, being recovered, successfully recovered, or failed to be recovered.

7. The method according to any one of claims 1 to 6, wherein before the determining first information, the method further comprises:
receiving a first request from the second apparatus, wherein
the first request comprises one or more of the following: a network issue query condition or network issue indication information, the network issue query condition is used to indicate the first apparatus to feed back the first information that meets the network issue query condition, and the network issue indication information indicates the first apparatus to feed back one or more of the following: the identification information of the network issue, the diagnosis information of the network issue, or the recovery information of the network issue.

8. The method according to any one of claims 1 to 7, wherein before the determining first information, the method further comprises:
receiving a second request from the second apparatus, wherein
the second request carries a network issue subscription requirement condition, and the network issue subscription requirement condition is used to indicate that the first apparatus feeds back the first information if the first information that meets the network issue subscription requirement condition is generated or updated.

9. A network issue information obtaining method, applied to a second apparatus, wherein the method comprises:
receiving first information about a network issue from a first apparatus, wherein the first information comprises one or more of the following: identification information of the network issue, diagnosis information of the network issue, or recovery information of the network issue, the diagnosis information describes an analysis result of the network issue, and the recovery information describes a recovery status of the network issue; and
determining, based on the first information, an operation for processing the network issue.

10. The method according to claim 9, wherein the network issue comprises one or more of the following: a network fault, a network exception, or a network performance indicator exception.

11. The method according to claim 9 or 10, wherein the identification information of the network issue comprises one or more of the following: a type of the network issue, or an object of the network issue;
the type of the network issue comprises one or more of the following: coverage, a rate, a capacity, a device fault, service experience, mobility, or energy consumption; and
the object of the network issue comprises one or more of the following: location information, a network element, a cell, or a terminal user.

12. The method according to claim 11, wherein the coverage corresponds to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage;
the rate corresponds to one or more of the following network issues: the rate is less than a first rate threshold, a quantity of low-rate users is greater than a first quantity threshold, or a quantity of high-rate users is less than a second quantity threshold, wherein the low-rate user is a user whose rate is less than a second rate threshold, and the high-rate user is a user whose rate is greater than a third rate threshold;
the capacity corresponds to one or more of the following network issues: network load is greater than a load threshold, network load is unbalanced, or a network is congested;
the device fault corresponds to one or more of the following network issues: a base station fault, a fronthaul fault, an optical interface fault, a clock fault, a cell fault, or a standing wave fault;
the service experience corresponds to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold, wherein the mean opinion score describes voice or video quality;
the mobility corresponds to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold; and
the energy consumption corresponds to one or more of the following network issues: the energy consumption is greater than an energy consumption threshold, or a traffic volume is lower than a traffic volume threshold but the energy consumption is greater than an energy consumption threshold.

13. The method according to claim 9 or 10, wherein the diagnosis information of the network issue comprises one or more of the following: a cause of the network issue, a recovery capability corresponding to the network issue, a recovery suggestion for the network issue, or a predicted recovery result of the network issue;
the recovery capability corresponding to the network issue comprises: the first apparatus can recover the network issue or the first apparatus cannot recover the network issue;
the recovery suggestion for the network issue comprises an operation of the first apparatus to recover the network issue; and
the predicted recovery result of the network issue comprises a predicted network performance indicator obtained after the network issue is recovered.

14. The method according to claim 9 or 10, wherein the recovery information of the network issue comprises one or more of the following: not recovered, being recovered, successfully recovered, or failed to be recovered.

15. The method according to any one of claims 9 to 14, wherein before the receiving first information about a network issue from a first apparatus, the method further comprises:
sending a first request to the first apparatus, wherein
the first request comprises one or more of the following: a network issue query condition or network issue indication information, the network issue query condition is used to indicate the first apparatus to feed back the first information that meets the network issue query condition, and the network issue indication information indicates the first apparatus to feed back one or more of the following: the identification information of the network issue, the diagnosis information of the network issue, or the recovery information of the network issue.

16. The method according to any one of claims 9 to 15, wherein before the receiving first information about a network issue from a first apparatus, the method further comprises:
sending a second request to the first apparatus, wherein
the second request carries a network issue subscription requirement condition, and the network issue subscription requirement condition is used to indicate that the first apparatus feeds back the first information if the first information that meets the network issue subscription requirement condition is generated or updated.

17. A network issue information obtaining apparatus, comprising a processing module and a transceiver module, wherein
the processing module is configured to determine first information about a network issue, wherein the first information comprises one or more of the following: identification information of the network issue, diagnosis information of the network issue, or recovery information of the network issue, the diagnosis information describes an analysis result of the network issue, and the recovery information describes a recovery status of the network issue; and
the transceiver module is configured to send the first information to a second apparatus.

18. The apparatus according to claim 17, wherein the network issue comprises one or more of the following: a network fault, a network exception, or a network performance indicator exception.

19. The apparatus according to claim 17 or 18, wherein the identification information of the network issue comprises one or more of the following: a type of the network issue, or an object of the network issue;
the type of the network issue comprises one or more of the following: coverage, a rate, a capacity, a device fault, service experience, mobility, or energy consumption; and
the object of the network issue comprises one or more of the following: location information, a network element, a cell, or a terminal user.

20. The apparatus according to claim 19, wherein the coverage corresponds to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage;
the rate corresponds to one or more of the following network issues: the rate is less than a first rate threshold, a quantity of low-rate users is greater than a first quantity threshold, or a quantity of high-rate users is less than a second quantity threshold, wherein the low-rate user is a user whose rate is less than a second rate threshold, and the high-rate user is a user whose rate is greater than a third rate threshold;
the capacity corresponds to one or more of the following network issues: network load is greater than a load threshold, network load is unbalanced, or a network is congested;
the device fault corresponds to one or more of the following network issues: a base station fault, a fronthaul fault, an optical interface fault, a clock fault, a cell fault, or a standing wave fault;
the service experience corresponds to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold, wherein the mean opinion score describes voice or video quality;
the mobility corresponds to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold; and
the energy consumption corresponds to one or more of the following network issues: the energy consumption is greater than an energy consumption threshold, or a traffic volume is lower than a traffic volume threshold but the energy consumption is greater than an energy consumption threshold.

21. The apparatus according to claim 17 or 18, wherein the diagnosis information of the network issue comprises one or more of the following: a cause of the network issue, a recovery capability corresponding to the network issue, a recovery suggestion for the network issue, or a predicted recovery result of the network issue;
the recovery capability corresponding to the network issue comprises: the network issue information obtaining apparatus can recover the network issue, or the network issue information obtaining apparatus cannot recover the network issue;
the recovery suggestion for the network issue comprises an operation of the network issue information obtaining apparatus to recover the network issue; and
the predicted recovery result of the network issue comprises a predicted network performance indicator obtained after the network issue is recovered.

22. The apparatus according to claim 17 or 18, wherein the recovery information of the network issue comprises one or more of the following: not recovered, being recovered, successfully recovered, or failed to be recovered.

23. The apparatus according to any one of claims 17 to 22, wherein the transceiver module is further configured to receive a first request from the second apparatus; and
the first request comprises one or more of the following: a network issue query condition or network issue indication information, the network issue query condition is used to indicate the network issue information obtaining apparatus to feed back the first information that meets the network issue query condition, and the network issue indication information indicates the network issue information obtaining apparatus to feed back one or more of the following: the identification information of the network issue, the diagnosis information of the network issue, or the recovery information of the network issue.

24. The apparatus according to any one of claims 17 to 23, wherein the transceiver module is further configured to receive a second request from the second apparatus; and
the second request carries a network issue subscription requirement condition, and the network issue subscription requirement condition is used to indicate that the network issue information obtaining apparatus feeds back the first information if the first information that meets the network issue subscription requirement condition is generated or updated.

25. A network issue information obtaining apparatus, comprising a processing module and a transceiver module, wherein
the transceiver module is configured to receive first information about a network issue from a first apparatus, wherein the first information comprises one or more of the following: identification information of the network issue, diagnosis information of the network issue, or recovery information of the network issue, the diagnosis information describes an analysis result of the network issue, and the recovery information describes a recovery status of the network issue; and
the processing module is configured to determine, based on the first information, an operation for processing the network issue.

26. The apparatus according to claim 25, wherein the network issue comprises one or more of the following: a network fault, a network exception, or a network performance indicator exception.

27. The apparatus according to claim 25 or 26, wherein the identification information of the network issue comprises one or more of the following: a type of the network issue, or an object of the network issue;
the type of the network issue comprises one or more of the following: coverage, a rate, a capacity, a device fault, service experience, mobility, or energy consumption; and
the object of the network issue comprises one or more of the following: location information, a network element, a cell, or a terminal user.

28. The apparatus according to claim 27, wherein the coverage corresponds to one or more of the following network issues: a coverage rate is less than a first coverage rate threshold, a coverage rate is greater than a second coverage rate threshold, reference signal received power is less than a reference signal received power threshold, a signal to interference plus noise ratio is less than a signal to interference plus noise ratio threshold, or there is no coverage;
the rate corresponds to one or more of the following network issues: the rate is less than a first rate threshold, a quantity of low-rate users is greater than a first quantity threshold, or a quantity of high-rate users is less than a second quantity threshold, wherein the low-rate user is a user whose rate is less than a second rate threshold, and the high-rate user is a user whose rate is greater than a third rate threshold;
the capacity corresponds to one or more of the following network issues: network load is greater than a load threshold, network load is unbalanced, or a network is congested;
the device fault corresponds to one or more of the following network issues: a base station fault, a fronthaul fault, an optical interface fault, a clock fault, a cell fault, or a standing wave fault;
the service experience corresponds to one or more of the following network issues: a delay is greater than a delay threshold, a delay jitter is greater than a delay jitter threshold, an access success rate is less than an access success rate threshold, a call drop rate is greater than a call drop rate threshold, a packet loss rate is greater than a packet loss rate threshold, or a mean opinion score is less than a mean opinion score threshold, wherein the mean opinion score describes voice or video quality;
the mobility corresponds to one or more of the following network issues: a handover success rate is less than a handover success rate threshold, a premature handover rate is greater than a premature handover rate threshold, a delayed handover rate is greater than a delayed handover rate threshold, or a ping-pong handover rate is greater than a ping-pong handover rate threshold; and
the energy consumption corresponds to one or more of the following network issues: the energy consumption is greater than an energy consumption threshold, or a traffic volume is lower than a traffic volume threshold but the energy consumption is greater than an energy consumption threshold.

29. The apparatus according to claim 25 or 26, wherein the diagnosis information of the network issue comprises one or more of the following: a cause of the network issue, a recovery capability corresponding to the network issue, a recovery suggestion for the network issue, or a predicted recovery result of the network issue;
the recovery capability corresponding to the network issue comprises: the first apparatus can recover the network issue or the first apparatus cannot recover the network issue;
the recovery suggestion for the network issue comprises an operation of the first apparatus to recover the network issue; and
the predicted recovery result of the network issue comprises a predicted network performance indicator obtained after the network issue is recovered.

30. The apparatus according to claim 25 or 26, wherein the recovery information of the network issue comprises one or more of the following: not recovered, being recovered, successfully recovered, or failed to be recovered.

31. The apparatus according to any one of claims 25 to 30, wherein the transceiver module is further configured to send a first request to the first apparatus; and
the first request comprises one or more of the following: a network issue query condition or network issue indication information, the network issue query condition is used to indicate the first apparatus to feed back the first information that meets the network issue query condition, and the network issue indication information indicates the first apparatus to feed back one or more of the following: the identification information of the network issue, the diagnosis information of the network issue, or the recovery information of the network issue.

32. The apparatus according to any one of claims 25 to 31, wherein the transceiver module is further configured to send a second request to the first apparatus; and
the second request carries a network issue subscription requirement condition, and the network issue subscription requirement condition is used to indicate that the first apparatus feeds back the first information if the first information that meets the network issue subscription requirement condition is generated or updated.

33. A network issue information obtaining apparatus, comprising a processor, wherein the processor is coupled to a memory; and
the processor is configured to execute a computer program stored in the memory, so that the network issue information obtaining apparatus performs the network issue information obtaining method according to any one of claims 1 to 16.

34. A communication system, comprising a first apparatus and a second apparatus, wherein the first apparatus is connected to the second apparatus;
the first apparatus is configured to perform the network issue information obtaining method according to any one of claims 1 to 8; and
the second apparatus is configured to perform the network issue information obtaining method according to any one of claims 9 to 16.

35. A communication method, applied to a communication system, wherein the communication system comprises a first apparatus and a second apparatus, the first apparatus is connected to the second apparatus, and the method comprises:
determining, by the first apparatus, first information about a network issue, wherein the first information comprises one or more of the following: identification information of the network issue, diagnosis information of the network issue, or recovery information of the network issue, the diagnosis information describes an analysis result of the network issue, and the recovery information describes a recovery status of the network issue;
sending, by the first apparatus, the first information to the second apparatus;
receiving, by the second apparatus, the first information about the network issue from the first apparatus; and
determining, by the second apparatus based on the first information, an operation for processing the network issue.

36. The method according to claim 35, wherein the identification information of the network issue comprises one or more of the following: a type of the network issue, or an object of the network issue;
the type of the network issue comprises one or more of the following: coverage, a rate, a capacity, a device fault, service experience, mobility, or energy consumption; and
the object of the network issue comprises one or more of the following: location information, a network element, a cell, or a terminal user.

37. The method according to claim 35, wherein the diagnosis information of the network issue comprises one or more of the following: a cause of the network issue, a recovery capability corresponding to the network issue, a recovery suggestion for the network issue, or a predicted recovery result of the network issue;
the recovery capability corresponding to the network issue comprises: the first apparatus can recover the network issue or the first apparatus cannot recover the network issue;
the recovery suggestion for the network issue comprises an operation of the first apparatus to recover the network issue; and
the predicted recovery result of the network issue comprises a predicted network performance indicator obtained after the network issue is recovered.

38. The method according to claim 35, wherein the recovery information of the network issue comprises one or more of the following: not recovered, being recovered, successfully recovered, or failed to be recovered.

39. A computer-readable storage medium, wherein the computer-readable storage medium comprises a computer program or instructions, and when the computer program or the instructions are run on a computer, the computer is enabled to perform the network issue information obtaining method according to any one of claims 1 to 16.
